(19) Europäisches Patentamt
European Patent Office
Office européen des brevets

(11) **EP 3 073 742 A1**

(12) **EUROPEAN PATENT APPLICATION**
published in accordance with Art. 153(4) EPC

(43) Date of publication:
**28.09.2016 Bulletin 2016/39**

(51) Int Cl.:
*H04N 21/234* (2011.01)     *H04N 19/30* (2014.01)
*H04N 19/186* (2014.01)

(21) Application number: **14863879.4**

(22) Date of filing: **21.11.2014**

(86) International application number:
**PCT/KR2014/011262**

(87) International publication number:
**WO 2015/076616 (28.05.2015 Gazette 2015/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.11.2013   US 201361906899 P**

(71) Applicant: **LG Electronics Inc.**
**Yeongdeungpo-gu**
**Seoul 07336 (KR)**

(72) Inventors:
• **OH, Hyunmook**
  **Seoul 137-893 (KR)**
• **SUH, Jongyeul**
  **Seoul 137-893 (KR)**
• **HWANG, Soojin**
  **Seoul 137-893 (KR)**

(74) Representative: **Cabinet Plasseraud**
**66, rue de la Chaussée d'Antin**
**75440 Paris Cedex 09 (FR)**

(54) **SIGNAL TRANSCEIVING APPARATUS AND SIGNAL TRANSCEIVING METHOD**

(57)     The present invention relates to a signal transceiving apparatus and signal transceiving method. The present invention provides a signal transmitting method for transmitting a stream generated by multiplexing signaling information, encoded base layer video data, and enhancement video data, which can configure scalable WCG video data, and provides a signal receiving method for outputting a legacy UHD video or a WCG video on the basis of the signaling information decoded by receiving the stream.

FIG. 1

**Description**

[Technical Field]

The present invention relates to a signal transmission and reception apparatus and a signal transmission and reception method.

[Background Art]

An ultra high definition (UHD) broadcast may be distinguished from a legacy broadcast and provide a high sense of realism, by expressing colors which cannot be expressed in legacy content. However, there is a need for a method of expressing the same content in a legacy receiver having relatively restricted color gamut even in an environment in which an image having a wide color gamut is provided in a state of studying a wide color gamut image and developing an image acquisition and display apparatus. If scalable approach which is a method of considering backward compatibility is used in an environment in which a transmission bandwidth is restricted, different video parameters may be applied to a single piece of content including different layers via an additional signal to compos and display an image having a color gamut suiting capacity of a receiver.

As a video signal processing speed has increased, a method of encoding/decoding ultra high definition (UHD) video has been studied.

An ultra high definition (UHD) broadcast may have discrimination against a legacy broadcast and provide a high sense of realism, by expressing colors which cannot be expressed in legacy content. A wide color gamut image such as UHD is being studied and an apparatus for displaying the wide color gamut image is being developed.

For example, a UHD broadcast have attempt to provide content having a sense of reality in various aspects to viewers in order to provide a broadcast service having distinguishable from a legacy HD broadcast.

However, if a UHD broadcast provides an image having a wide color gamut, a method of expressing content having a wide color gamut in a legacy receiver having relatively restricted color gamut is not provided.

For example, a wide color gamut (WCG) obtained by expanding a color gamut which is a color expression range of a legacy display may be used in order to enable the color expression range of content to approach a color range acquired via a human visual system. Hereinafter, a video service or content for providing a WCG based color gamut is referred to as a WCG service or WCG content.

An image acquisition apparatus or display apparatus capable of accurately acquiring or expressing WCG is being developed. During a predetermined period, a service including a wide color gamut image of a UHD broadcast will be provided via a legacy image acquisition apparatus and display apparatus.

Accordingly, if a WCG service is provided in the future, a viewer should replace a legacy display apparatus or a legacy image receiver with a new receiver. Accordingly, for example, the number of viewers may be reduced from the viewpoint of a broadcast station for providing a UHD broadcast image.

Conventionally, a method of receiving WCG content not only at a receiver capable of displaying WCG content but also at a legacy receiver is not provided.

[Disclosure]

[Technical Problem]

An object of the present invention devised to solve the problem lies in a signal transmission and reception method and signal transmission and reception apparatus capable of displaying a video service based on a wide color gamut.

Another object of the present invention devised to solve the problem lies in a signal transmission and reception method and signal transmission and reception apparatus capable of providing compatible WCG content even in a legacy receiver.

Another object of the present invention devised to solve the problem lies in a signal transmission and reception method and signal transmission and reception apparatus capable of compatibly providing a video service based on a wide color gamut in a plurality of display apparatuses.

Another object of the present invention devised to solve the problem lies in a signal transmission and reception method and signal transmission and reception apparatus capable of providing a broadcast service for compatibly expressing WCG information of content.

[Technical Solution]

The object of the present invention can be achieved by providing a signal transmission method including encoding base layer video data and enhancement video data for providing a scalable wide color gamut (WCG) video service, generating signaling information for rendering the scalable WCG video data of the scalable WCG video service, outputting a stream obtained by multiplexing the generated signaling information, the encoded base layer video data and the encoded enhancement video data, and transmitting the multiplexed stream.

The signaling information may include information for identifying the scalable WCG video service. The encoded base layer video data or the encoded enhancement video data may include metadata having color gamut mapping information, color bit depth information or color mapping information for rendering the scalable WCG video data.

In another aspect of the present invention, provided herein is a signal transmission apparatus including an encoder configured to encode base layer video data and enhancement layer video data for providing a scalable wide color gamut (WCG) video service, a signaling information encoder configured to encode signaling information for rendering the scalable WCG video data, a multiplexer configured to output a stream obtained by multiplexing the generated signaling information, the encoded base layer video data and the encoded enhancement video data, and a transmission unit configured to transmit the multiplexed stream.

In another aspect of the present invention, provided herein is a signal reception method including receiving a stream including base layer video data and enhancement layr video data for rendering scalable wide color gamut (WCG) video data, demultiplexing the received stream and outputting video data including the base layer video data and the enhancement layer video data and signaling information, decoding the demultiplexed signaling information, and decoding the base layer video data and/or the enhancement layer video data based on the decoded signaling information and outputting legacy UHD video or WCG video.

In another aspect of the present invention, provided herein is a signal reception apparatus including a receiver configured to receive a stream including base layer video data and enhancement layer video data for rendering scalable wide color gamut (WCG) video data, a demultiplexer configured to demultiplex the received stream and to output video data including the base layer video data and the enhancement layer video data and signaling information, a decoder configured to decode the demultiplexed signaling information, and a video decoder configured to decode the base layer video data and/or the enhancement layer video data based on the decoded signaling information and to output legacy UHD video or WCG video.

The WCG video may be rendered by color gamut mapping the base layer video data using the color gamut mapping information or upscaling a color bit depth of the base layer video data using the color bit depth information, based on the enhancement layer video data.

[Advantageous Effects]

According to the embodiment of the present invention, it is possible to display a video service based on a wide color gamut on a display apparatus regardless of the display apparatus.

According to the embodiment of the present invention, it is possible to provide compatible WCG content even in a legacy receiver.

According to the embodiment of the present invention, it is possible to compatibly provide a video service based on a wide color gamut in a plurality of display apparatuses.

According to the embodiment of the present invention, it is possible to provide a broadcast service for compatibly expressing WCG information of content.

[Description of Drawings]

FIG. 1 is a diagram showing one embodiment of a signal transmission method according to the present invention.
FIG. 2 is a diagram showing a method of displaying WCG content according to an embodiment of the present invention.
FIG. 3 is a diagram showing an example of a WCG video composition unit according to an embodiment of the present invention.
FIG. 4 is a diagram showing another example of a WCG video composition unit according to an embodiment of the present invention.
FIG. 5 is a diagram showing a post-processing unit 190 according to an embodiment of the present invention.
FIG. 6 is a diagram showing an example of generating scalable WCG video according to an embodiment of the present invention.

FIG. 7 is a diagram showing another example of composing WCG video according to an embodiment of the present invention.

FIG. 8 is a diagram showing broadcast signaling information according one embodiment of the present invention (PMT).

FIG. 9 is a diagram showing the case in which a stream descriptor describing a scalable WCG video service is located in a PMT according to one embodiment of the present invention.

FIG. 10 is a diagram showing an example of a descriptor (WCG_sub_stream_descriptor) disclosed according to an embodiment of the present invention.

FIG. 11 is a diagram showing the syntax for payload of an SEI region of video data according to an embodiment of the present invention.

FIG. 12 is a diagram showing metadata of scalable WCG video included in payload of an SEI region disclosed according to an embodiment of the present invention.

FIG. 13 is a diagram showing a method of arbitrarily indicating color gamut information of base layer video data or enhancement layer video data in metadata of scalable WCG video according to an embodiment of the present invention.

FIG. 14 is a diagram showing original UHD video format information original_UD_video_type of metadata of scalable WCG video according to an embodiment of the present invention.

FIG. 15 is a diagram showing color gamut information of base layer video of metadata of scalable WCG video according to an embodiment of the present invention in detail.

FIG. 16 is a diagram showing color gamut information of enhancement layer video of metadata of scalable WCG video according to an embodiment of the present invention in detail.

FIG. 17 is a diagram showing color gamut mapping function information for obtaining WCG video of metadata of scalable WCG video according to an embodiment of the present invention in detail.

FIG. 18 is a diagram showing broadcast signaling information as one embodiment of the present invention.

FIG. 19 is a diagram showing another syntax for payload of an SEI region of video data according to an embodiment of the present invention.

FIG. 20 is a diagram showing another example of metadata of scalable WCG video included in payload of an SEI region disclosed according to an embodiment of the present invention.

FIG. 21 is a diagram showing an example of color gamut mapping information included in metadata of scalable WCG video according to an embodiment of the present invention.

FIG. 22 is a diagram showing color gamut mapping matrix type information (matrix_composition_type) which may be used to map color gamut information according to an embodiment of the present invention.

FIG. 23 is a diagram showing an embodiment of a detailed color mapping matrix when color gamut mapping matrix type information included in metadata of WCG video indicates a normalized primary matrix according to BT.709 according to the present invention.

FIG. 24 is a diagram showing an embodiment of obtaining a normalized primary matrix indicated by color gamut mapping matrix type information included in metadata of WCG video based on a color primary value of current video according to an embodiment of the present invention.

FIG. 25 is a diagram showing a transformation equation for expressing a color gamut conversion coefficient (gamut_mapping_coeff[1]) of color gamut mapping information included in metadata of WCG video according to an embodiment of the present invention.

FIG. 26 is a diagram showing the type of a look-up table (LUT) according to an LUT_type field of color gamut mapping information included in metadata of WCG video according to an embodiment of the present invention.

FIG. 27 is a diagram showing broadcast signaling information as one embodiment of the present invention.

FIG. 28 is a diagram showing a detailed example including a descriptor for signaling scalable WCG video included in such broadcast signaling information as one embodiment of the present invention.

FIG. 29 is a diagram showing another example in which signaling information for signaling scalable WCG video is included in broadcast signaling information as one embodiment of the present invention.

FIG. 30 is a diagram showing another example in which signaling information for signaling scalable WCG video is included in broadcast signaling information as one embodiment of the present invention.

FIG. 31 is a diagram showing another example in which signaling information for signaling scalable WCG video is included in broadcast signaling information as one embodiment of the present invention.

FIG. 32 is a diagram showing one example of a signal transmission apparatus according to an embodiment of the present invention.

FIG. 33 is a diagram showing an example of another signal transmission apparatus according to an embodiment of the present invention.

FIG. 34 is a diagram showing an example of a signal reception apparatus according to an embodiment of the present invention.

FIG. 35 is a diagram showing an example of a signal reception method according to an embodiment of the present invention.

[Best Mode]

Hereinafter, the embodiments of the present invention will be described with reference to the accompanying drawings.

Appropriate content needs to be provided according to a color expression range of a display of a consumer in a situation in which content having wide color gamut (WCG) and a display apparatus capable of expressing the content are introduced. Content suitable for color expression characteristics of each display should be provided to a display having a legacy UHD color gamut and a WCG display. However, when the same content is generated and provided in different color gamuts in a state in which bandwidth for a broadcast service is restricted, bandwidth which is double that of a conventional method should be used, thereby imposing a burden on a broadcast station or a content provider. Hereinafter, an embodiment of providing broadcast services having different color gamuts using data of a plurality of layers according to scalable coding with respect to a color gamut in content and of efficiently using bandwidth will be described.

Hereinafter, WCG video (content) refers to video (content), color of which is expressed according to the range of WCG.

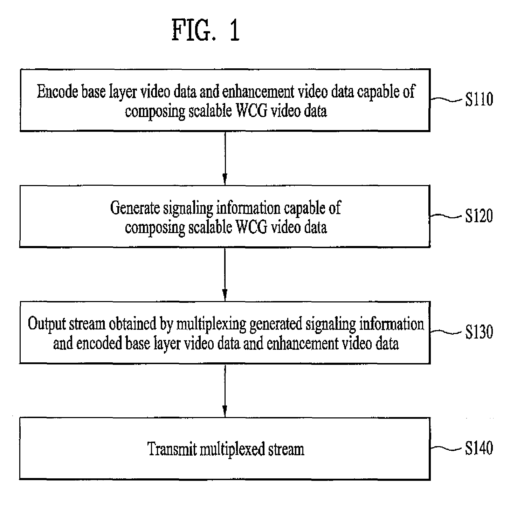

FIG. 1 is a diagram showing one embodiment of a signal transmission method according to the present invention.

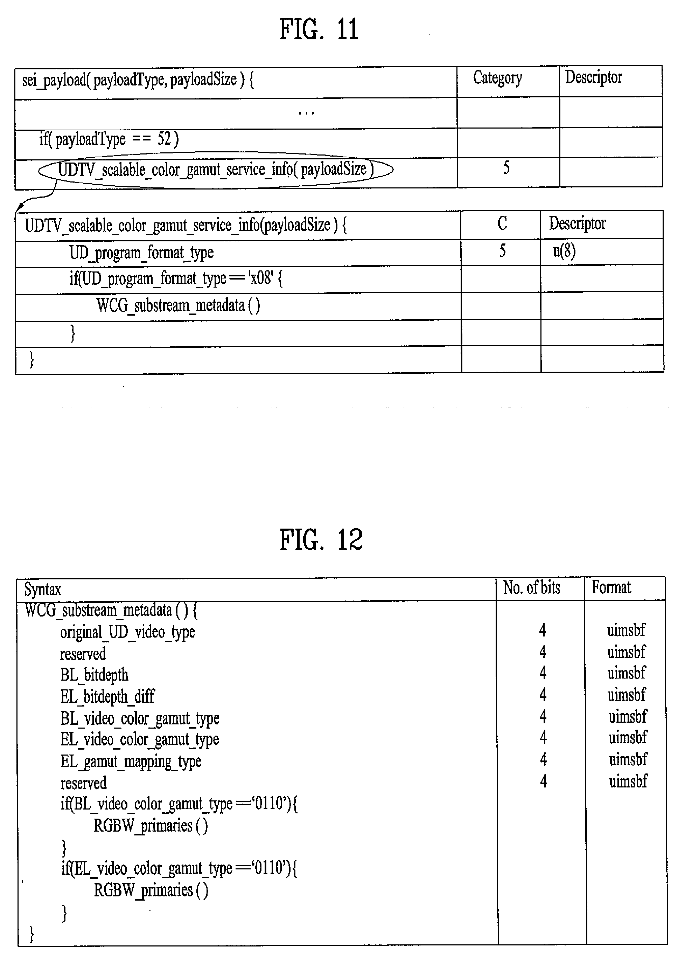

Base layer video data and enhancement video data capable of composing scalable WCG video data are encoded (S110). Here, signaling information capable of composing the scalable WCG video data may be included in metadata of the base layer video data and enhancement video data capable of composing the scalable WCG video data. The examples of the metadata will be described with reference to FIGs. 11 to 17 and 19 to 26.

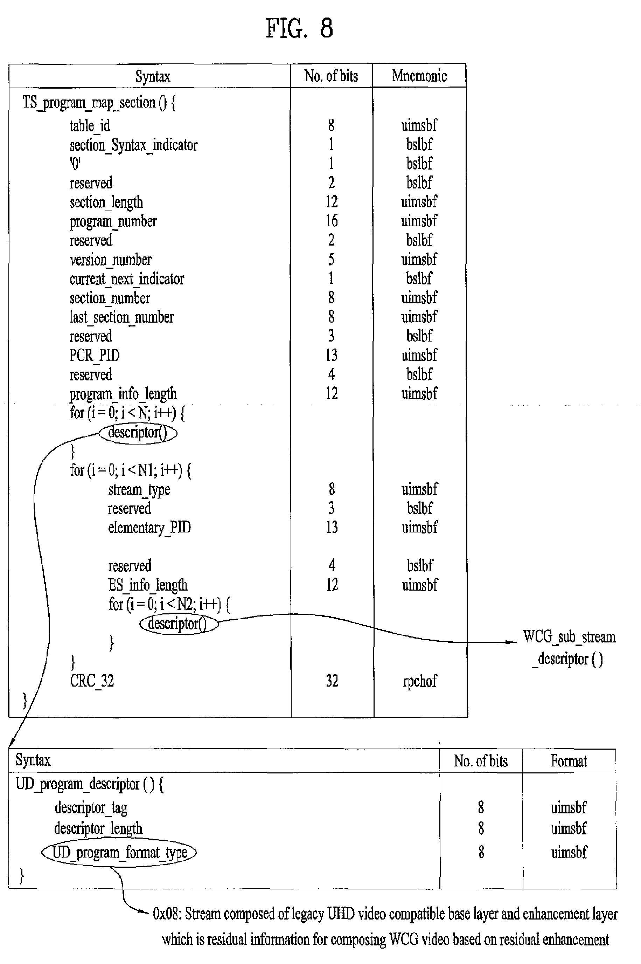

Signaling information capable of composing scalable WCG video data is generated (S120). The signaling information of this step refers to signaling information of a system level as broadcast signaling information. Detailed examples thereof will be described with reference to FIGs. 8 to 10, 18 and 27 to 31.

A stream obtained by multiplexing the generated signaling information and the encoded base layer video data and enhancement video data is output (S130).

The multiplexed stream is transmitted (S140).

According to an embodiment of the present invention, a receiver may restore WCG video with enhancement layer video data and data obtained by updating the color bit depth of base layer video data compatible with legacy UHD video.

Alternatively, according to an embodiment of the present invention, a receiver may restore WCG video with enhancement layer video data and data color gamut mapped to the base layer video data compatible with legacy UHD video.

Accordingly, WCG video may be displayed according to the capacity of a display apparatus of a receiver and legacy UHD video may be output using only base layer video data.

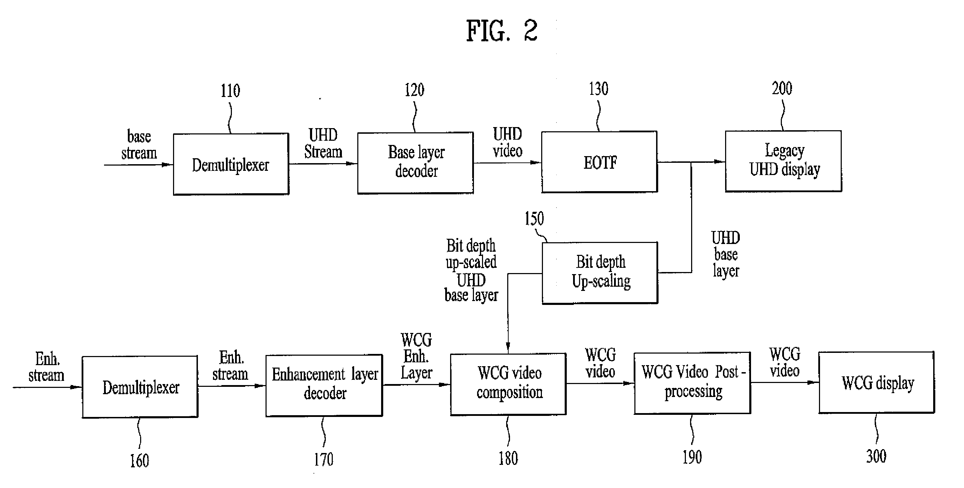

FIG. 2 is a diagram showing a method of displaying WCG content according to an embodiment of the present invention. In this figure, an embodiment of operation of a receiver considering backward compatibility with respect to WCG content is shown.

When base layer video data and enhancement layer video data according to scalable coding are delivered to a transport channel, after each video data is decoded, a legacy receiver may display the base layer video data (legacy UHD color gamut video) on a legacy display and display WCG video on a display capable of displaying WCG content (hereinafter, WCG display) using the enhancement layer video data.

A first demultiplexer 110 demultiplexes a UHD base layer video stream from a stream. Here, the base layer video stream transmits UHD video (hereinafter, legacy UHD video or legacy UHD color gamut video) data capable of being displayed on a legacy display.

A base layer decoder 120 decodes the demultiplexed UHD base layer video stream and outputs legacy UHD video data. The base layer decoder 120 may be a codec capable of performing HEVC decoding.

A color conversion unit (EOTF) 130 converts the color of the legacy UHD video data and outputs the color-converted legacy UHD video data. Then, a legacy UHD display 200 may display the color-converted legacy UHD video data.

An upscaler 150 upscales the color bit depth of the legacy UHD video data output from the color conversion unit (EOTF) 130 and outputs bit depth upscaled UHD base layer video data expressing colors. For example, the color conversion unit (EOTF) 130 may upscale UHD base layer video data of a color 8-bit color depth to UHD base layer video data of a 10-bit color depth.

A second demultiplexer 160 demultiplexes a UHD enhancement layer video stream from a stream.

Although shown as different blocks in the figure, the first demultiplexer 110 and the second demultiplexer 160 may operate as one demultiplexer.

An enhancement layer decoder 170 decodes the demultiplexed UHD enhancement layer video stream and outputs WCG enhancement layer video data enabling content to be expressed in a WCG color gamut.

A WCG video composition unit 180 outputs WCG video using the WCG enhancement layer video data and the upscaled UHD base layer video data output from the upscaler 150.

As described above, the WCG video refers to video, the color of which is expressed according to the WCG range. Hereinafter, WCG video data compatible with a legacy display using scalable coding is referred to as scalable WCG video.

A post-processing unit 190 post-processes the scalable WCG video composed using different layer data to make the converted colors more natural and outputs the WCG video to a WCG display 300.

In this case, signaling information of a UHD broadcast service may be used. For example, a legacy receiver may decode and output only base layer video, if it is determined that the receiver cannot process enhancement layer video data or cannot display WCG video to be acquired via enhancement layer video data, after identifying the UHD service.

The legacy receiver may identify video data which cannot be processed using signaling information of the UHD service, e.g., a UHD service type in the signaling information or service descriptors describing the UHD service (the below-described UD_program_descriptor(), UD_program_format_type, etc.). The signaling information of the broadcast service will be described below.

The WCG display 300 outputs final WCG video acquired using the enhancement layer video data. When the color gamut of the display apparatus is equal to the color gamut of the final video, the post-processing unit 190 need not perform separate video processing. However, when the display apparatus can express more colors or when a manufacturer provides color expression suitable for the characteristics of a display panel, an improved color may be provided via the post-processing unit 190 related to WCG information. At this time, as a criterion for determining the color gamut of content, signaling information of a broadcast service may be used, which will be described below.

Hereinafter, the detailed embodiment of the WCG video composition unit 180 and the post-processing unit 190 will be further described.

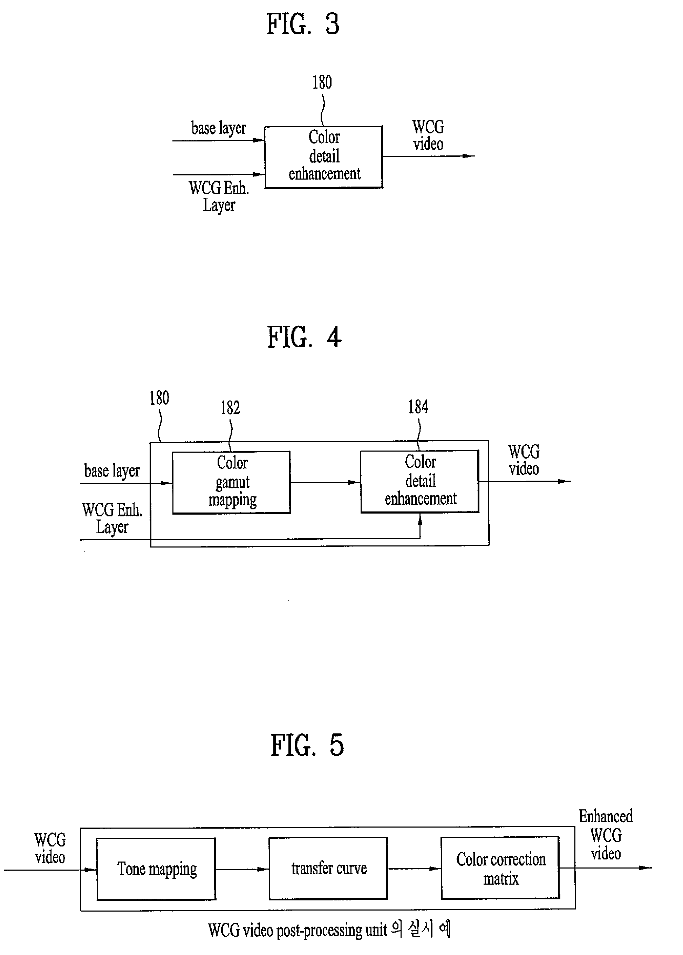

FIG. 3 is a diagram showing an example of a WCG video composition unit according to an embodiment of the present invention. As described above, the WCG video composition unit 180 outputs WCG video, which is WCG content, using the upscaled UHD base layer video and the WCG enhancement layer video. At this time, the color of video may be enhanced in detail using the signaling information of the broadcast service to compose WCG video.

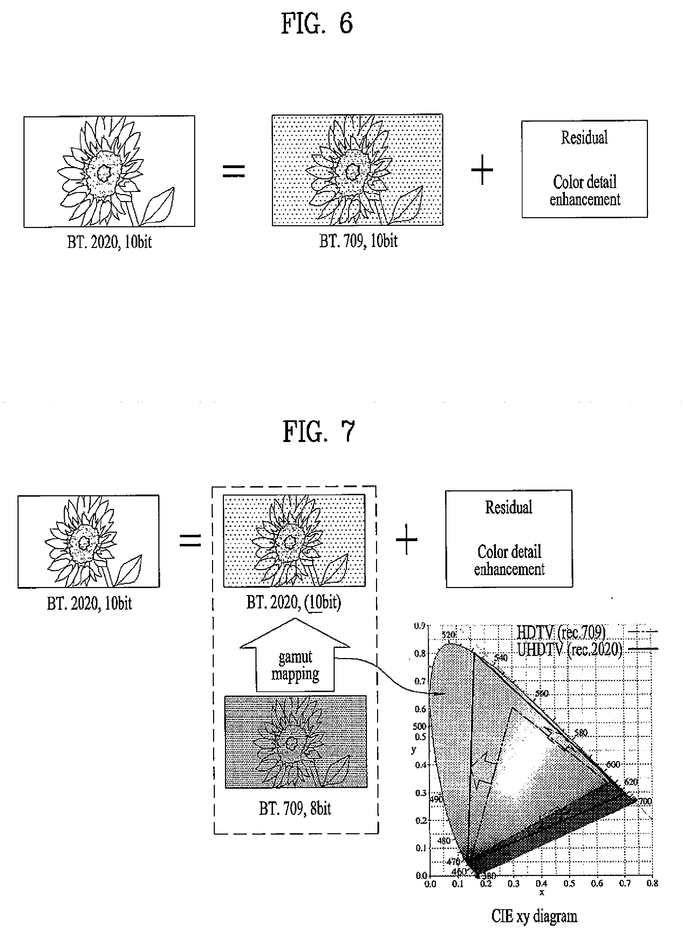

The WCG video composition unit 180 may include a color detail enhancement unit for restoring the color of original video from the base layer video using residual video data of an enhancement layer, which will be described below with reference to FIG. 6.

FIG. 4 is a diagram showing another example of a WCG video composition unit according to an embodiment of the present invention. The WCG video composition unit 180 may include a color gamut mapping unit 182 and a color detail enhancement unit 184.

For the UHD base layer video upscaled using the signaling information of the broadcast service, the color gamut mapping unit 182 maps the color gamut of the base layer video data to a WCG color expressible region. Then, the color detail enhancement unit 184 enhances the color of video using residual video data of the mapped base layer video data and enhancement layer and composes and outputs WCG video.

When color gamut mapping is applied to the base layer video data, the color gamut of content expands. However, in this case, since color gamut mapping is performed in one-to-multiple correspondence, it may be impossible to accurately express the color of each pixel. Accordingly, the color of original video may be restored via the residual video data of the enhancement layer.

Here, the residual video data is composed of a difference between the base layer data, the color gamut of which is mapped to the WCG region, and original video data. By adding the base layer data, the color gamut of which is mapped to the WCG region, and the residual video data, final WCG video may be composed, which will be described below with reference to FIG. 7.

The color gamut mapping unit 182 expands and maps the color gamut of the base layer video to video having a color gamut close to the WCG video of an original image. The color gamut mapping unit 182 may confirm the color gamut information of each layer data via the below-described signaling information (BL_video_color_gamut_type field, EL_video_color_gamut_type field) and obtain information on start and end points of the color gamut.

For example, when the base layer video has a video color format defined as BT.709 and the enhancement layer video has a video color format defined as BT.2020, the color gamut mapping function of the color gamut mapping unit 182 maps video defined as BT.709 to video defined as BT.2020.

Color gamut mapping may be implemented using various methods. Mapping between two layers may not be necessary (residual information of an enhancement layer may not be necessary) or mapping of each layer may be independently performed, mapping may be performed using a linear matrix, or mapping may be performed point by point using a look-up table (LUT).

Such color gamut mapping methods may be signaled using the below-described signaling information (EL_gamut_mapping_type) and the color gamut mapping unit may acquire detailed parameters via such signaling information.

As another example, color gamut mapping may be added as a scalable coding part or operate in association with a color correction matrix of a post-processing part for legacy image quality processing. That is, the post-processing unit may recognize a coefficient based on a color gamut mapping function according to the signaling information (EL_gamut_mapping_type) and perform gamut mapping. This will now be described in detail.

FIG. 5 is a diagram showing the post-processing unit 190 according to an embodiment of the present invention.

The post-processing unit may include a tone mapping unit, a transfer curve unit and/or a color correction matrix unit. The post-processing unit 190 may perform tone mapping with respect to WCG video, change the color using a color addition transfer curve or perform post-processing using a color correction matrix for performing color gamut mapping. Accordingly, the post-processing unit 190 may output WCG video having an enhanced WCG video color.

FIG. 6 is a diagram showing an example of generating scalable WCG video according to an embodiment of the present invention. As described above, the base layer video data may be video data defined as the color of BT.709 and an 8-bit depth and base layer video data obtained by upscaling the base layer video data defined as BT.709 and the 8-bit depth is shown as BT.709 and 10 bits in the figure.

The WCG video data may be video of a 10-bit depth defined as BT.2020. Accordingly, the difference between the WCG video data and the base layer video data upscaled to the 10-bit depth may become residual video data of scalable video coding. The embodiment of FIG. 3 shows a process of restoring WCG video data using the difference between two videos.

FIG. 7 is a diagram showing another example of composing WCG video according to an embodiment of the present invention.

WCG video data may be video defined as BT.2020 and a 10-bit depth and base layer video data may be video data defined as BT.709 and an 8-bit depth. In this case, the base layer video data may be color-gamut mapped to video defined as BT.2020 and the 10-bit depth. A difference between WCG video data and the color-gamut-mapped base layer video data may be residual video data of scalable video coding.

Accordingly, WCG video data may be restored by adding the color-gamut-mapped base layer video data and the residual video data. The description of this figure may correspond to the embodiment of FIG. 4.

Hereinafter, an example of transmitting and receiving signaling information of a broadcast service so as to compose WCG video transmitted by scalable coding (hereinafter, referred to as scalable WCG video, service or program) will be described.

The below-described embodiment may provide signaling information according to the example of FIG. 3 or FIG. 6 or the example of FIG. 4 or FIG. 7.

First, an embodiment of upscaling WCG enhancement layer video data and UHD base layer video data which is legacy UHD video compatible with a legacy display apparatus and providing WCG video will be described.

The disclosed embodiment may deliver and provide a color gamut scalable video composition method for composing WCG video using residual data of enhancement data at a system level of a broadcast to a decoder upon decoding enhancement layer video. The embodiment of the present invention may transmit signaling information of WCG video composition in an SEI message.

For example, in a PMT, a codec type, profile information, level information and tier information of video data may be transmitted to an enhancement layer decoder via the below-described WCG_sub_stream_descriptor. In the SEI message, video related metadata such as color gamut information and gamut mapping parameters of original video and WCG video may be transmitted and received.

First, signaling information of a system level of a broadcast of WCG video transmitted by scalable coding will be described.

FIG. 8 is a diagram showing broadcast signaling information according one embodiment of the present invention. A PMT of broadcast signaling information and signaling information included therein will now be described.

The PMT may follow the description of ISO/IEC 13818-1. Using this, the fields will now be described.

A table_id fields is an 8-bit identifier indicating the type of a PMT section. (table_id - This is an 8-bit field, which in the case of a TS_program_map_section shall be always set to 0x02.)

A section_syntax_indicator field is a 1-bit field set to 1 with respect to a VCTsection. (section_syntax_indicator - The section_syntax_indicator is a 1-bit field which shall be set to '1'.)

A section_length - This is a 12-bit field, the first two bits of which shall be '00'. The remaining 10 bits specify the number of bytes of the section starting immediately following the section_length field, and includin the CRC

A program_number field indicates a program to which this program_map_PID is applicable. (program_number - program_number is a 16-bit field. It specifies the program to which the program_map_PID is applicable. One program definition shall be carried within only one TS_program_map_section. This implies that a program definition is never longer than 1016 (0x3F8). See Informative Annex C for ways to deal with the cases when that length is not sufficient. The program_number may be used as a designation for a broadcast channel, for example. By describing the different program elements belonging to a program, data from different sources (e.g. sequential events) can be concatenated together to form a continuous set of streams using a program_number.)

A version_number field indicates the version number of the VCT. (version_number - This 5-bit field is the version number of the TS_program_map_section. The version number shall be incremented by 1 modulo 32 when a change in the information carried within the section occurs. Version number refers to the definition of a single program, and therefore to a single section. When the current_next_indicator is set to '1', then the version_number shall be that of the currently applicable TS_program_map_section. When the current_next_indicator is set to '0', then the version_number shall be that of the next applicable TS_program_map_section)

A current_next_indicator field indicates whether this PMT is applicable currently or next. (current_next_indicator - A 1-bit field, which when set to '1' indicates that the TS_program_map_section sent is currently applicable. When the bit is set to '0', it indicates that the TS_program_map_section sent is not yet applicable and shall be the next TS_program_map_section to become valid.)

A section_number fields indicates the number of the section. (section_number - The value of this 8-bit field shall be 0x00.)

A last_section_number fields indicates the number of a last section.

(last_section_number - The value of this 8-bit field shall be 0x00.)

A PCR PID indicates the PID of TS packets including a PCR field of a program specified by a program number. (PCR_PID - This is a 13-bit field indicating the PID of the Transport Stream packets which shall contain the PCR fields valid for the program specified by program_number. If no PCR is associated with a program definition for private streams, then this field shall take the value of 0x1FFF.)

A program_info_length field indicates the length of a descriptor of a program level following this field. (program_info_length - This is a 12-bit field, the first two bits of which shall be '00'. The remaining 10 bits specify the number of bytes of the descriptors immediately following the program_info_length field.)

A stream_type fields indicates the type of a program element stream. (stream_type - This is an 8-bit field specifying the type of program element carried within the packets with the PID whose value is specified by the elementary_PID)

An elementary_PID field specifies the PID of TS packets which carry the associated program element. (elementary_PID - This is a 13-bit field specifying the PID of the Transport Stream packets which carry the associated program element)

An ES_info_length field indicates the length of a program element level descriptor. (ES_info_length - This is a 12-bit field, the first two bits of which shall be '00'. The remaining 10 bits specify the number of bytes of the descriptors of the associated program element immediately following the ES_info_length field.)

A CRC 32 field indicates a 32-bit field including a CRC value. (CRC_32 - This is a 32-bit field that contains the CRC value that gives a zero output of the registers in the decoder)

The PMT may include a program level descriptor and an elementary stream level descriptor.

The PMT may include a descriptor capable of describing a program composing WCG video using base layer video data which is legacy UHD video compatible with a legacy display and residual enhancement layer video data which is a difference between WCG video and legacy UHD video (or video, the color bit depth of which is upscaled) at the program level.

According to one embodiment of the present invention, a program capable of composing WCG video may be signaled via a UD_program_descriptor immediately after the program_info_length field of the PMT. For example, if the UD_program_format_type of the UD_program_descriptor is 0x08, this indicates that the program is a program which may compose scalable WCG video (WCG composition program) using base layer video data compatible with legacy UHD video and residual enhancement layer video data.

According to one embodiment of the present invention, the PMT may include a descriptor (WCG_sub_stream_descriptor ()) including stream information of a program composing a scalable WCG video service in a descriptor of a stream level, which will be described in detail below.

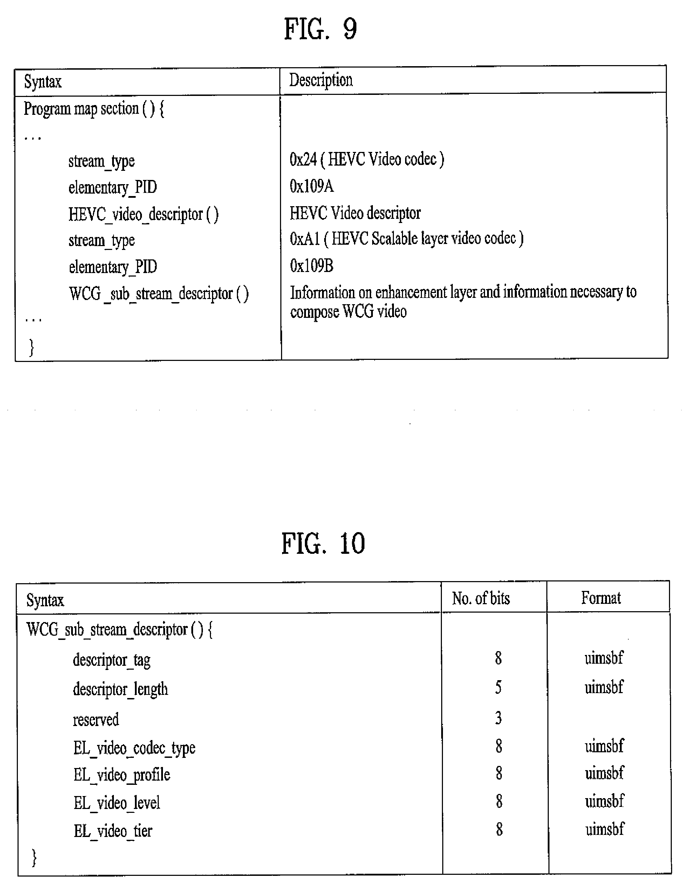

FIG. 9 is a diagram showing the case in which a stream descriptor describing a scalable WCG video service is located in a PMT according to one embodiment of the present invention.

For example, when a stream_type field is 0x24, the video stream indicates a video stream according to an HEVC video codec. In this case, an elementary_PID field may have a value of 0x109A. When an HEVC_video_descriptor() is located in the PMT, this may indicate that the video stream is coded using HEVC and a descriptor describing this HEVC video may be included.

If the stream_type field is 0xA1, this may indicate video stream according to an HEVC scalable layer video codec. In this case, the elementary_PID may be 0x109B.

That is, when scalable WCG video is transmitted, a WCG_sub_stream_descriptor () which is a descriptor capable of describing streams composing video may be located at the stream level of the PMT. The WCG_sub_stream_descriptor () may include information on the enhancement layer of a scalable WCG video service and composition information of the scalable WCG video service.

FIG. 10 is a diagram showing an example of the WCG_sub_stream_descriptor disclosed according to an embodiment of the present invention. The WCG_sub_stream_descriptor includes information on a stream composing a WCG video service.

Here, a descriptor_tag field indicates a unique code value indicating a WCG_sub_stream_descriptor.

A descriptor_length field indicates the total length of the WCG_sub_stream_descriptor.

An EL_video_codec_type field indicates the codec of a video element composing scalable WCG video. For example, this field may have the same value as the stream_type of the PMT.

An EL_video_profile field indicates the profile of the video stream, that is, the basic specifications necessary to decode the stream. Bit depth information (8-bit, 10-bit, etc.) of the video stream, requirement information of a coding tool, etc. may be included.

An EL_video_level field defines the level of the video stream, that is, the supported range of the description element defined in the profile. The EL_video_level field may include resolution information, frame rate information, bit rate information, etc.

An EL_video_tier field may indicate tier information of the video stream.

As the embodiment of the present invention, signaling information of the video level of the scalable WCG video is as follows. Information composing the scalable WCG video may be included at the video level and, for example, information on scalable WCG video may be included in the SEI message of video data.

FIG. 11 is a diagram showing the syntax for payload of an SEI region of video data according to an embodiment of the present invention.

In an SEI payload, when a payloadType is set to a specific value (52, in this example), an SEI message may include information for signaling the format of scalable WCG video data (UDTV_scalable_color_gamut_service_info(payloadSize)). This signaling information indicates metadata of scalable WCG video.

An embodiment in which a decoder of a receiver parses video data according to the syntax will now be described.

When the decoder decodes video data, AVC or HEVC NAL unit is parsed from a video element stream. When a nal_unit_type value corresponds to SEI data and a payloadType of the SEI data is 52, information according to UDTV_scalable_color_gamut_service_info may be obtained.

UDTV_scalable_color_gamut_service_info(payloadSize) which is information for signaling the format of the scalable WCG video data in the payload region of the SEI region may include a field indicating the format information of UHD video data (UD_program format type).

When the format information of the UHD video data indicates the format of the scalable WCG video, metadata (WCG_substream_metadata) of the scalable WCG video may be included. The metadata of the scalable WCG video will be described in detail below.

FIG. 12 is a diagram showing metadata of scalable WCG video included in payload of an SEI region disclosed according to an embodiment of the present invention.

When a substream of scalable WCG video data is present, information capable of expanding color gamut information of base layer data of a substream and color gamut related information of each of base layer and enhancement layer video data may be included.

The metadata of scalable WCG video may describe a method of expanding color gamut information of a base layer using a substream of enhancement layer data. A detailed description of each item will now be given.

An original_UD_video_type field is information on a UHD video format and indicates basic information of base layer video data such as resolution and frame rate of video. Alternatively, this field may indicate common video information of video of quality higher than that of video based on a base layer. A detailed example thereof will be given below.

A BL_bitdepth field indicates bit depth information of base layer video data.

An EL_bitdepth_diff: This is a value indicating bit depth information of scalable WCG video which may be finally obtained using enhancement layer video data, and indicates a difference in bit depth between enhancement layer video data and base layer video data.

A BL_video_color_gamut_type field indicates color gamut information of base layer video data. A detailed example thereof will be given below.

An EL_video_color_gamut_type field indicates color gamut information of video generated by enhancement layer video data. A detailed example thereof will be given below.

An EL_gamut_mapping_type field indicates information on a gamut mapping function used to acquire final WCG video.

An RGBW_primaries() field is information indicating color gamut coordinates of colors capable of defining a color gamut, that is, R, G, B and W (white), when the color gamut type of base layer video data or enhancement layer video data uses an arbitrary value instead of a specified value.

Accordingly, in the metadata of the scalable WCG video included in the payload of the SEI region, if the BL_video_color_gamut_type field or the EL_video_color_gamut_type field has a specific value, an arbitrary value may be used for the color gamut of the below-described video data. A detailed example thereof will be given below.

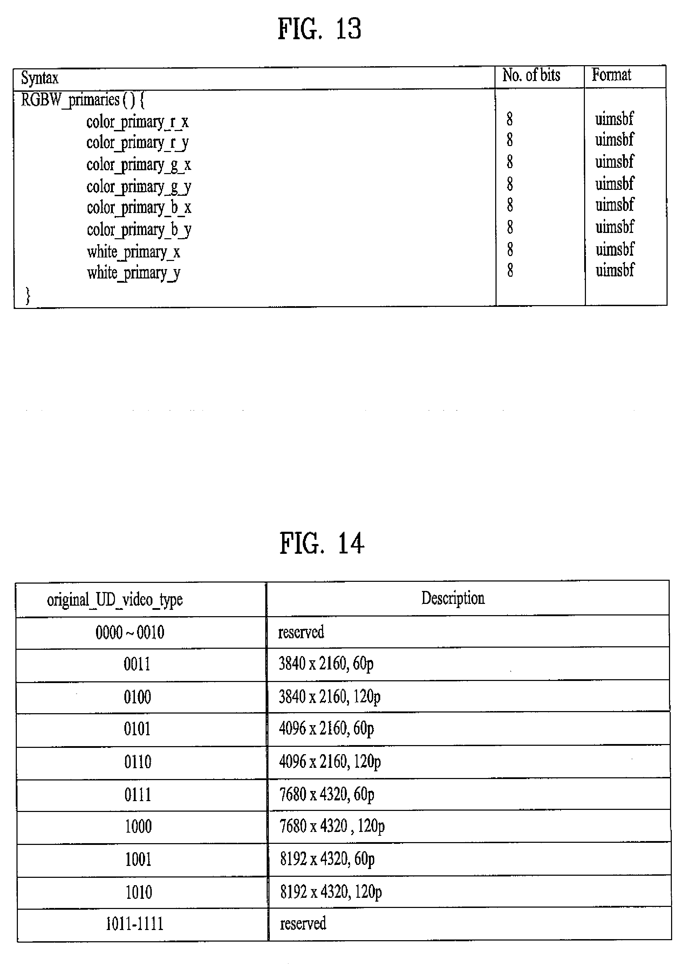

FIG. 13 is a diagram showing a method of arbitrarily indicating color gamut information of base layer video data or enhancement layer video data in metadata of scalable WCG video according to an embodiment of the present invention.

A color_primary_r_x field indicates the x coordinate value of the color R of the color gamut (e.g., CIE 1931). This may be used to determine whether the display of a viewer includes target color gamut information. The color_primary_r_x field may indicate a value obtained by binarizing a value between 0 and 1 or a difference with a reference value.

A color_primary_r_y field indicates the y coordinate value of the color R of the color gamut (e.g., CIE 1931). This may be used to determine whether the display of a viewer includes target color gamut information. The color_primary_r_y field may indicate a value obtained by binarizing a value between 0 and 1 or a difference with a reference value.

A color_primary_g_x field indicates the x coordinate value of the color G of the color gamut (e.g., CIE 1931). This may be used to determine whether the display of a viewer includes target color gamut information. The color_primary_g_x field may indicate a value obtained by binarizing a value between 0 and 1 or a difference with a reference value.

A color_primary_g_y field indicates the x coordinate value of the color G of the color gamut (e.g., CIE 1931). This may be used to determine whether the display of a viewer includes target color gamut information. The color_primary_g_y field may indicate a value obtained by binarizing a value between 0 and 1 or a difference with a reference value.

A color_primary_b_x field indicates the x coordinate value of the color B of the color gamut (e.g., CIE 1931). This may be used to determine whether the display of a viewer includes target color gamut information. The color_primary_b_x field may indicate a value obtained by binarizing a value between 0 and 1 or a difference with a reference value.

A color_primary_b_y field indicates the x coordinate value of the color B of the color gamut (e.g., CIE 1931). This may be used to determine whether the display of a viewer includes target color gamut information. The color_primary_b_y field may indicate a value obtained by binarizing a value between 0 and 1 or a difference with a reference value.

A white_primary_x field indicates the x coordinate value of a color space when an arbitrary color temperature is specified. The white_primary_x field may indicate a value obtained by binarizing a value between 0 and 1 or a difference between a reference color temperature and the arbitrary color temperature.

A white_primary_y field indicates the y coordinate value of a color space when an arbitrary color temperature is specified. The white_primary_y field may indicate a value obtained by binarizing a value between 0 and 1 or a difference between a reference color temperature and the arbitrary color temperature.

FIG. 14 is a diagram showing information on an original UHD video format (original_UD_video_type) of metadata of scalable WCG video according to an embodiment of the present invention.

The information on an original UHD video format of the metadata of scalable WCG video is information on the UHD video format as described above and may indicate information on the original UHD video format, such as resolution information, frame rate information, etc. of video. For example, the information on the original UHD video format may indicate basic information on base layer video data.

Information on the UHD video format according to the embodiment of the present invention may indicate that the resolution and frame rate of video are 3840 x 2160 (60p), 3840 x 2160 (120p), 4096 x 2160 (60p), 4096 x 2160 (120p), 7680 x 4320 (60p), 7680 x 4320 (120p), 8192 x 4320 (60p), 8192 x 4320 (120p) according to the field value (where, p indicates a progressive mode).

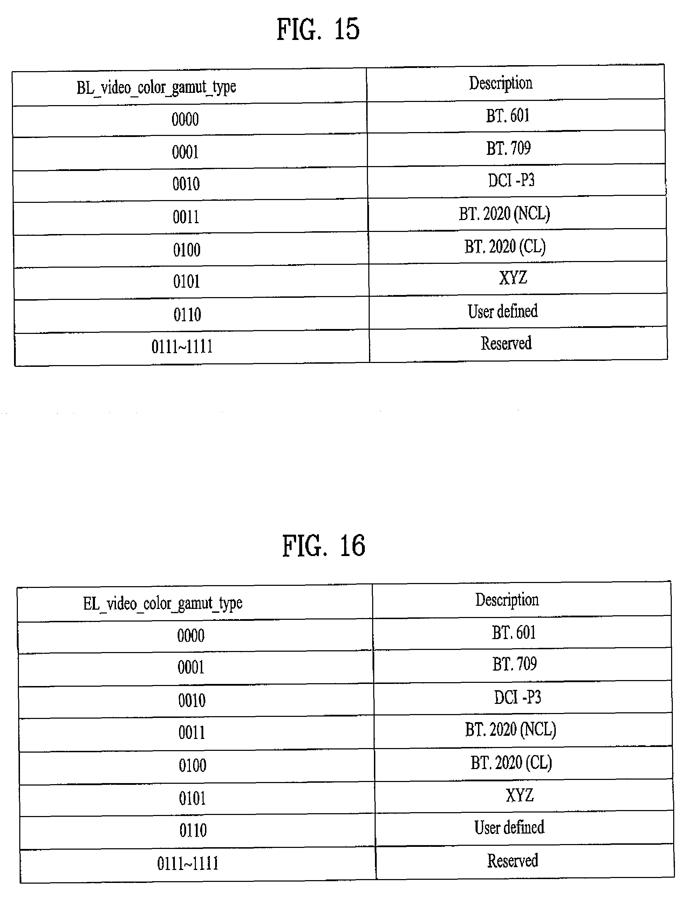

FIG. 15 is a diagram showing color gamut information of base layer video of metadata of scalable WCG video according to an embodiment of the present invention in detail. The color gamut information of the base layer video of the metadata of scalable WCG video according to the embodiment of the present invention may be information indicating a specific color gamut, such as BT.601, BT.709, DCI-P3, BT.2020 (NCL), BT.2020 (CL), XYZ and User defined (user-specified information), according to the field value.

FIG. 16 is a diagram showing color gamut information of enhancement layer video of metadata of scalable WCG video according to an embodiment of the present invention in detail. The color gamut information of the enhancement layer video of the metadata of scalable WCG video according to the embodiment of the present invention may be information indicating a specific color gamut, such as BT.601, BT.709, DCI-P3, BT.2020 (NCL), BT.2020 (CL), XYZ and User defined (user-specified information), according to the field value.

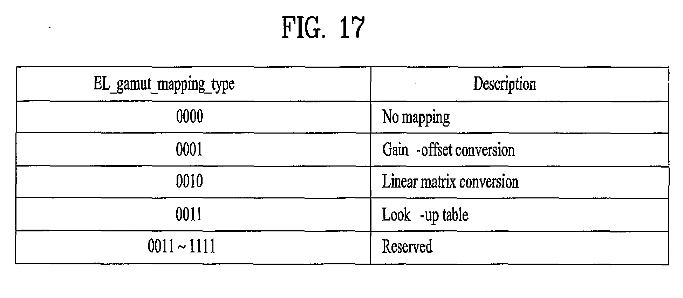

FIG. 17 is a diagram showing color gamut mapping function information for obtaining WCG video of metadata of scalable WCG video according to an embodiment of the present invention.

As the metadata of scalable WCG video, the color gamut mapping function information for obtaining scalable WCG video may indicate a mapping function such as no-mapping, gain offset conversion, linear matrix conversion, or look-up table (mapping according to look-up table). The color gamut mapping function information of the metadata of WCG video may be provided if the color gamut mapping function is used to obtain final WCG video.

Accordingly, when the signal transmission apparatus according to the present invention transmits the above-described signaling information, the receiver may confirm the video format or color gamut information of the base layer video data and the enhancement layer video data and output scalable WCG video based thereon. Accordingly, the receiver having a display apparatus capable of expressing legacy colors may display legacy UHD video using the base layer video data and a receiver having a display apparatus capable of providing a WCG service may display a WCG video service.

Operation of a receiver for performing reception when scalable WCG video and signaling information for signaling the video are transmitted according to the disclosed embodiments will now be described.

When scalable WCG video is transmitted, the receiver may receive signaling information, combine substreams of the scalable WCG video and output WCG video.

The signaling information decoder of the receiver determines whether a separate service or media is further received in order to configure an original UHDTV broadcast using a program descriptor (UD_program_descriptor) of the received PMT. The scalable WCG video described in the present embodiment corresponds to the UD_program_format_typeof 0x08. At this time, it can be seen that scalable WCG video may be composed using the additional information of an SEI message in the video data and the enhancement layer video data.

The signaling information decoder of the receiver may check codec information, profile information, level information, tier information, etc. of a service stream via a stream descriptor (WCG_sub_stream_descriptor) and determine whether the information can be processed in the decoder of the receiver, when the UD_program_format_typefield is 0x08 (that is, in case of a program composing scalable WCG video).

The video decoder of the receiver may obtain color gamut information and bit depth information (bit depth related information) of scalable WCG video composed by the base layer and the enhancement layer from a UDTV_scalable_color_gamut_service_info SEI message in the video data and determine whether video may be finally output from the display apparatus of the receiver.

If the signaling information decoder of the receiver determines that the video data cannot be processed by the video decoder, the video decoder of the receiver may decode only base layer video data. When the signaling information decoder of the receiver determines that the video decoder can decode and process WCG video, the video decoder may compose scalable WCG video.

If the luminance information of the scalable WCG video obtained by decoding the SEI message of the video data at the video decoder cannot be output from the display of the receiver, the receiver may output only base layer video or appropriately post-process the luminance information of the scalable WCG video and output WCG video.

If the video decoder may compose the scalable WCG video according to signaling information and the display apparatus of the receiver may display the scalable WCG video, the receiver may enable the video decoder to decode substreams.

The decoder of the receiver may compose scalable WCG video using the UDTV_scalable_color_gamut_service_info SEI message along with enhancement layer video data.

At this time, the decoder of the receiver may obtain color bit depth information (BL_bitdepth field) of a base layer and difference information (EL_bitdepth_diff field) in color bit depth between enhancement layer video data and base layer video data and upscale the color bit depth of the base layer video data.

The decoder of the receiver may compensate for detailed data of the color gamut of the upscaled base layer video data using residual data of the enhancement layer.

The receiver may display video having further improved luminance via post-processing of WCG video before final display or perform color conversion with respect to video which is unlikely to be displayed on the display apparatus. At this time, color gamut information (EL_video_color_gamut_type) or arbitrary color gamut information (as color primary value of RGBW, color_primary_A_x or color_primary_A_y, where, A is one of R, G, B and W) of the enhancement layer video data transmitted in the SEI message may be used.

Operation of the receiver according to the embodiment of the present invention will be described with reference to the drawings.

Hereinafter, as an example of a signaling method according to an embodiment of the present invention, a signaling method of composing scalable WCG video using color-gamut-mapped base layer video data and enhancement layer video data will be described. In this case, information for composing scalable WCG video may be provided at the system level of the broadcast and metadata may be provided in an SEI message at a video level so as to perform color gamut mapping of base layer video data.

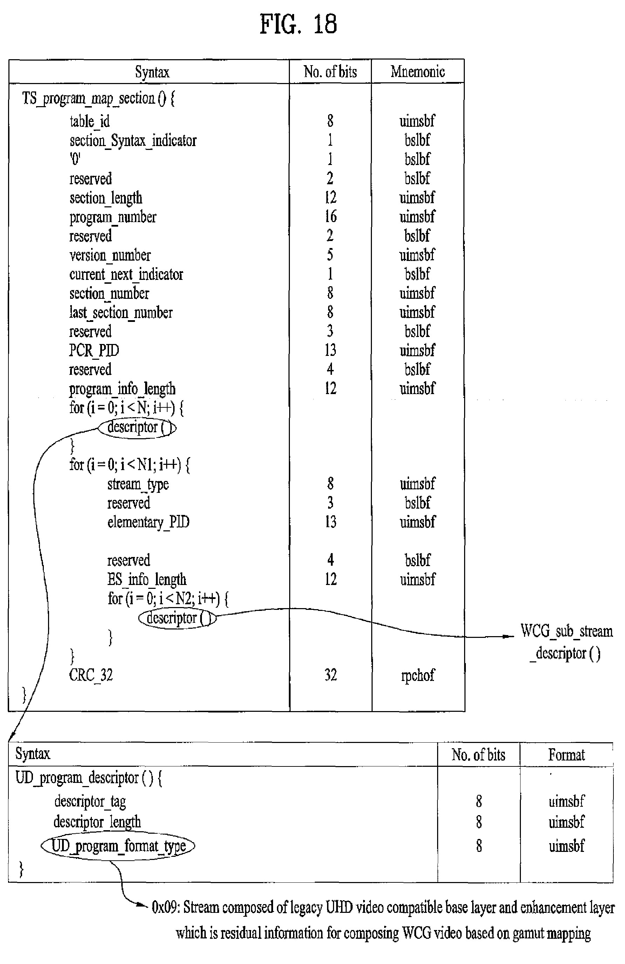

FIG. 18 is a diagram showing broadcast signaling information as one embodiment of the present invention. A PMT of broadcast signaling information and signaling information included therein will now be described.

The PMT may include a program level descriptor and an elementary stream level descriptor.

The PMT is a program level descriptor and may include a descriptor which may describe a program composing WCG video based on color gamut mapping of base layer video data compatible with legacy UHD video.

According to one embodiment of the present invention, a UD_program_descriptor following the program_info_length field of the PMT may signal a program for transmitting scalable WCG video. In this example, when the UD_program_format_typefield of the UD_program_descriptor is 0x09, this indicates that the program may compose WCG video based on color gamut mapping of base layer video data compatible with legacy UHD video.

According to one embodiment of the present invention, the PMT may include a descriptor (WCG_sub_stream_descriptor()) including stream information of a program composing a scalable WCG video service in the stream level descriptor. Here, the descriptor (WCG_sub_stream_descriptor()) including stream information of the program may include information on base layer video data compatible with legacy UHD video.

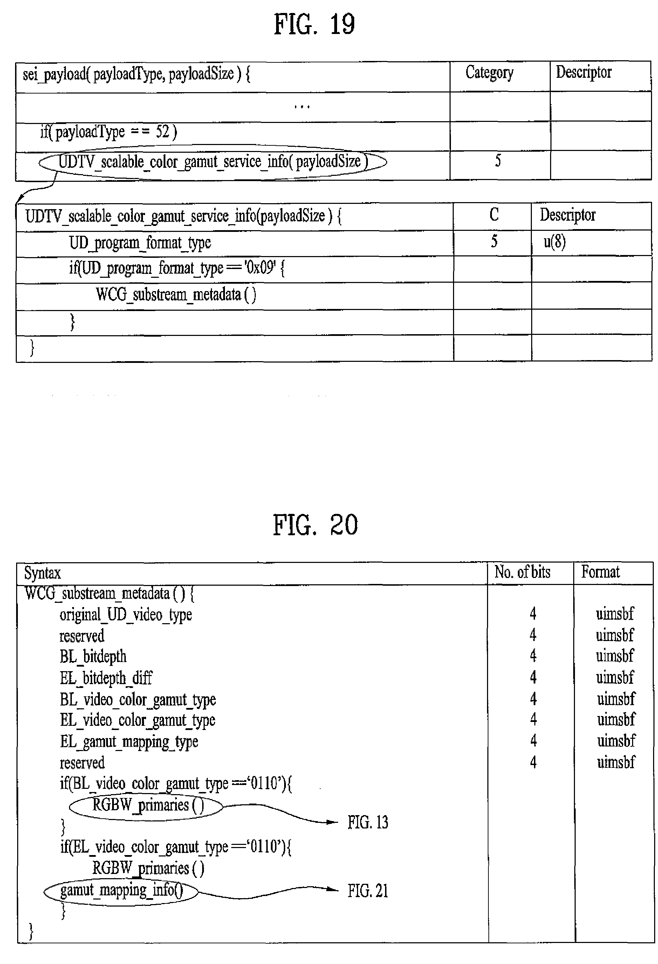

FIG. 19 is a diagram showing another syntax for payload of an SEI region of video data according to an embodiment of the present invention.

If a payloadType is set to a specific value (52, in this example) in the SEI payload, information for signaling the format of scalable WCG video data (UDTV_scalable_color_gamut_service_info(payloadSize)) may be included.

An embodiment in which the decoder of the receiver parses video data according to the syntax will now be described.

When the decoder decodes video data, AVC or HEVC NAL unit is parsed from the video element stream. When the nal_unit_type value corresponds to SEI data and a payloadType of the SEI data is 52, information according to UDTV_scalable_color_gamut_service_info may be obtained.

UDTV_scalable_color_gamut_service_info(payloadSize) which is information for signaling the format of scalable WCG video data in the payload region of the SEI region may include a field indicating the format information of UHD video data (UD_program_format_type). As shown in FIG. 18, the format information of the UHD video data may indicate that the program may compose WCG video based on color-gamut-mapped data of the base layer video data compatible with legacy UHD video and WCG enhancement layer video data, if the UD_program_format_typefield is 0x09.

When the format information of UHD video data indicates the format of scalable WCG video, metadata (WCG_substream_metadata) of scalable WCG video may be included. This will now be described in detail.

FIG. 20 is a diagram showing another example of metadata of scalable WCG video included in payload of an SEI region disclosed according to an embodiment of the present invention.

The metadata of the scalable WCG video may include, as shown in FIG. 12, UHD video format information (original_UD_video_type field), bit depth information of base layer video data (BL_bitdepth field), information on difference between the bit depth of scalable WCG video finally obtained using enhancement layer video data and the bit depth of base layer video data (EL_bitdepth_diff field), color gamut information of base layer video data (BL_video_color_gamut_type field), color gamut information generated by enhancement layer video data (EL_video_color_gamut_type field), information on a gamut mapping function used to acquire final WCG video (EL_gamut_mapping_type field) and arbitrary color gamut type information of base layer video data or enhancement layer video data (RGBW_primaries() field).

The metadata of the scalable WCG video according to the embodiment of the present invention may further include color gamut mapping information (gamut_mapping_info()). The color gamut mapping information included in the metadata of the scalable WCG video will now be described in detail.

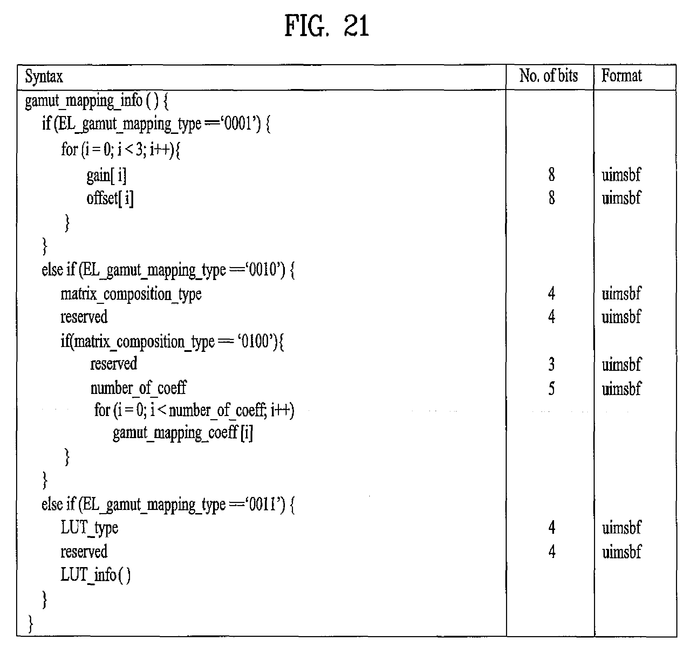

FIG. 21 is a diagram showing an example of color gamut mapping information included in metadata of scalable WCG video according to an embodiment of the present invention.

The color gamut mapping information included in the metadata of the scalable WCG video according to the embodiment of the present invention may indicate a method for expanding the color gamut of a base layer based on an enhancement layer.

The color gamut mapping information may indicate a color gamut mapping type for acquiring video with improved image quality or color from base layer video data. The color gamut mapping method may be signaled according to the EL_gamut_mapping type field which is the color gamut mapping type and the type of a parameter to be transmitted in this information may be changed according to the type of this function.

When special color gamut mapping is not performed, a channel-independent mapping method based on gain offset of a color conversion function may be indicated, a mapping method using a linear matrix may be indicated, or a mapping method based on an LUT may be described.

When the color gamut mapping type information (EL_gamut_mapping_type) is 0000, this indicates that the base layer is not separately processed in configuration of the enhancement layer of scalable WCG video.

When the color gamut mapping type information (EL_gamut_mapping_type) is 0001, the color gamut mapping method is a method of mapping colors by signaling the gain offset of a function. An example thereof is based on Equation 1.

Equation 1

$$R' = gain[0] * R + offset\,[0]$$
$$G' = gain[1] * G + offset\,[1]$$
$$B' = gain[2] * B + offset\,[2]$$

When the color gamut mapping type information (EL_gamut_mapping_type) is 0010, the color gamut information is mapped using the matrix and, for example, the method described in ITU-R BT.2250 may be used. When this is used, first, a YcbCR color coordinate transformed for encoding is transformed into an RGB coordinate again. Primary transformation may be performed in order to convert the gamut in CIE colorimetry with respect to the converted RGB coordinate.

A matrix_composition_type field indicates a method of composing a matrix for mapping color gamut information based on matrix conversion. A method of composing a matrix for mapping color gamut information is based on a normalized primary matrix (NPM) for source and target color gamuts and the source color gamut is mapped and then is mapped to the target gamut. A detailed example thereof is shown in Equation 2. An example of mapping a color gamut used in HDTV to another target color gamut is shown in Equation 2.

Equation 2

$$\begin{bmatrix} R_D \\ G_D \\ B_D \end{bmatrix} = NPM_D^{-1} \cdot NPM_{HDTV} \begin{bmatrix} R \\ G \\ B \end{bmatrix}_{HDTV}$$

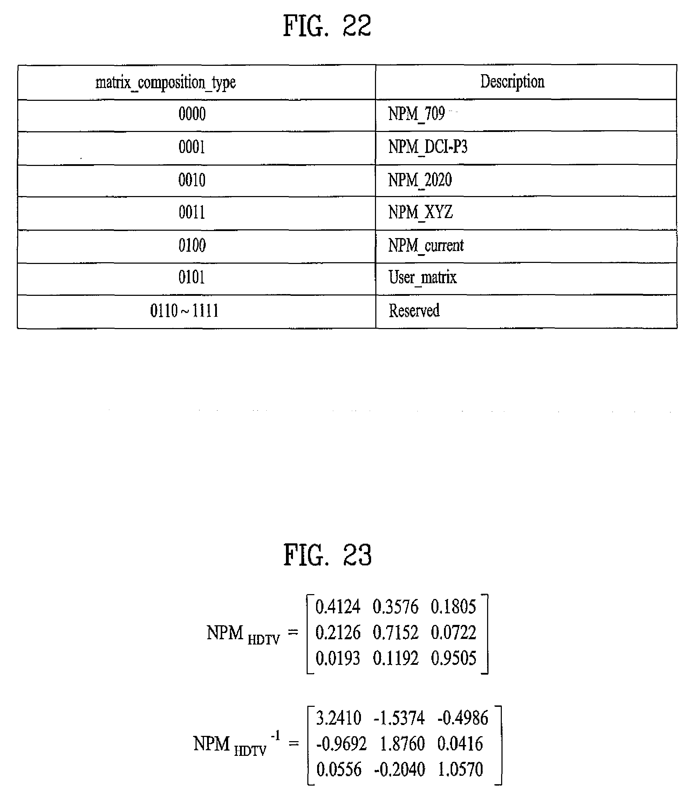

In order to map color gamut information, there is a method of signaling an NPM pre-specified to each color gamut or directly calculating a currently given color primary matrix and a detailed example thereof is shown in FIG. 23. As another example, signaling information may directly include a color gamut mapping matrix.

The matrix_composition_type field may indicate methods of mapping various color gamuts according to the value of this field and an example of the color gamut mapping methods is shown in FIG. 22.

A number_of_coeff field indicates the number of coefficients used for additional color gamut conversion.

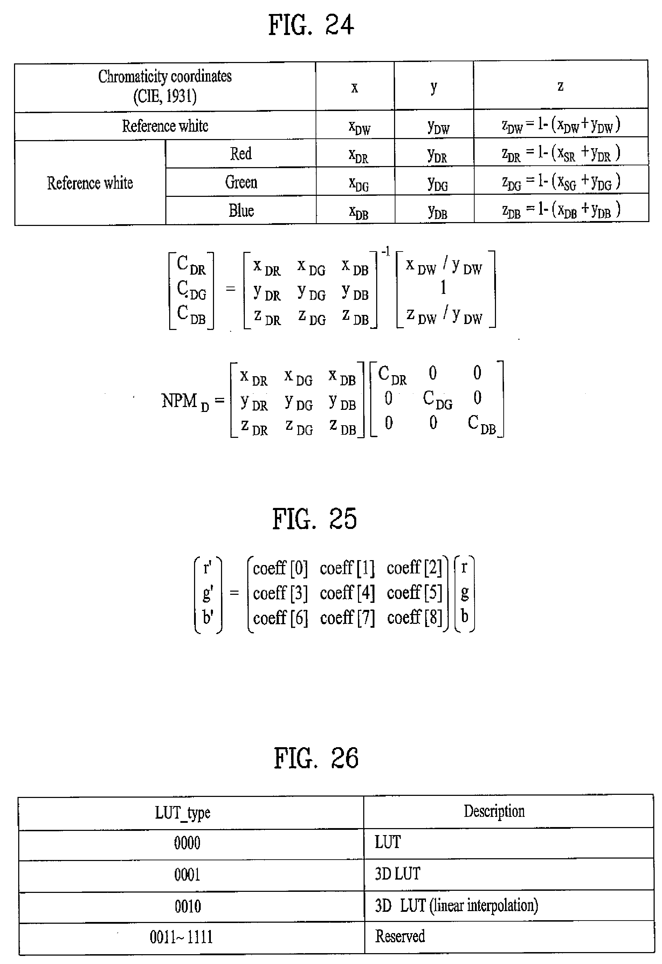

A gamut_mapping_coeff[i] field indicates a coefficient for color gamut conversion. If it is assumed that an arbitrary color gamut for optimal color expression is transformed based on a color gamut expressed by color_gamut syntax, an optimal color gamut may be used using a transformation equation. An example of the transformation equation is shown in FIG. 25. Alternatively, another transformation equation may be used according to designation of a user.

When the color gamut mapping type information (EL_gamut_mapping_type) is 0011, this may indicate color gamut mapping based on an LUT. A method most widely used for color gamut mapping is a method using a look-up table (LUT). In this method, a table for enabling one-to-one correspondence between input values and output values is used. However, in case of an LUT in which output values correspond to all colors, since the amount of data is extremely large, it is difficult to deliver the data in the form of metadata. According to the embodiment, instead of use of all 3D coordinates, independent matching of each channel or a method of estimating an LUT component based on a reference point may be used.

An LUT_type field indicates the type of a used look-up table (LUT). In this field, an LUT for independent matching of each channel, an LUT using all 3D coordinates or a method of estimating an LUT component based on a reference point may be indicated. The LUT type according to the LUT_type field value is shown in FIG. 26.

FIG. 22 is a diagram showing color gamut mapping matrix type information (matrix_composition_type) which may be used to map color gamut information according to an embodiment of the present invention. As shown therein, color gamut information mapping may be performed according to a color gamut mapping matrix type (matrix_composition_type).

For example, when the color gamut mapping matrix type information (matrix_composition_type) field is 0000, this indicates a normalized primary matrix according to BT.709. This matrix method is shown in FIG. 23.

When the color gamut mapping matrix type information (matrix_composition_type) field is 0001, this indicates a normalized primary matrix according to DCI-P3.

When the color gamut mapping matrix type information (matrix_composition_type) field is 0010, this indicates a normalized primary matrix according to BT.2020.

When the color gamut mapping matrix type information (matrix_composition_type) field is 0100, this indicates a normalized primary matrix based on a color primary value of current video. This matrix and mapping method are shown in FIG. 24.

FIG. 23 is a diagram showing an embodiment of a detailed color mapping matrix when color gamut mapping matrix type information included in metadata of WCG video indicates a normalized primary matrix according to BT.709 according to the present invention. The color gamut mapping matrix type information shown therein shows the matrix if color gamut mapping follows the matrix of NPM_709 (normalized primary matrix according to BT.709).

FIG. 24 is a diagram showing an embodiment of obtaining a normalized primary matrix indicated by color gamut mapping matrix type information included in metadata of WCG video based on a color primary value of current video according to an embodiment of the present invention. In this figure, if current colors are X, Y and Z, a method of converting the current colors into color primary values and a color gamut mapping matrix using the same are shown.

FIG. 25 is a diagram showing a transformation equation for expressing a color gamut conversion coefficient (gamut_mapping_coeff[1]) of color gamut mapping information included in metadata of WCG video according to an embodiment of the present invention. For example, a color gamut conversion coefficient of color gamut mapping information may become a coefficient included in the component of the matrix.

FIG. 26 is a diagram showing the type of a look-up table (LUT) according to an LUT type field of color gamut mapping information included in metadata of WCG video according to an embodiment of the present invention. Look-up tables such as LUT, 3D LUT, and 3D LUT (linear interpolation) may be indicated according to the LUT_type value.

An example of providing information for scalable WCG video composition at the system level of a broadcast according to the signaling method according to the embodiment of the present invention and including and providing color gamut mapping information of base layer video data in an SEI message at the video level as metadata is disclosed.

According, when scalable WCG video and signaling information for signaling the video are transmitted, operation of a receiver for receiving the scalable WCG video and signaling information will now be described.

When scalable WCG video is transmitted, the receiver may receive signaling information, combine substreams of the scalable WCG video and output WCG video.

The signaling information decoder of the receiver determines whether a separate service or media is further received in order to configure an original UHDTV broadcast using a program descriptor (UD_program_descriptor) of the received PMT. The scalable WCG video described in the present embodiment corresponds to the UD_program_format_typeof 0x09. At this time, it can be seen that scalable WCG video may be composed using the additional information of an SEI message in the video data and the enhancement layer video data.

The signaling information decoder of the receiver may check codec information, profile information, level information, tier information, etc. of a service stream via a stream descriptor (WCG_sub_stream_descriptor) and determine whether the information may be processed in the decoder of the receiver, when the UD_program_format_typefield is 0x09 (that is, in case of a program composing WCG video using WCG enhancement layer video data and data for updating the color bit depth of base layer video data compatible with legacy UHD video).

The video decoder of the receiver may obtain color gamut information and bit depth information (bit depth related information) of scalable WCG video composed by the base layer and the enhancement layer from a UDTV_scalable_color_gamut_service_info SEI message in the video data and determine whether video may be finally output from the display apparatus of the receiver.

If the signaling information decoder of the receiver determines that the video data cannot be processed by the video decoder, the video decoder of the receiver may decode only base layer video data. When the signaling information decoder of the receiver determines that the video decoder can decode and process WCG video, the video decoder may compose scalable WCG video using data obtained by updating the color bit depth of base layer video data compatible with legacy UHD video and WCG enhancement layer video data.

If the luminance information of the scalable WCG video obtained by decoding the SEI message of the video data at the video decoder cannot be output from the display of the receiver, the receiver may output only base layer video or appropriately post-process the luminance information of the scalable WCG video and output WCG video.

If the video decoder can compose the scalable WCG video according to signaling information and the display apparatus of the receiver can display the scalable WCG video, the receiver may enable the video decoder to decode substreams.

The decoder of the receiver may compose scalable WCG video using the color gamut mapping information of the UDTV_scalable_color_gamut_service_info SEI message along with enhancement layer video data. The scalable WCG video may be composed using data obtained by updating the color bit depth of base layer video data compatible with legacy UHD video and WCG enhancement layer video data.

The receiver may display video having further improved luminance via post-processing of WCG video before final display or perform color conversion with respect to video which is unlikely to be displayed on the display apparatus. At this time, color gamut information (EL_video_color_gamut_type) or arbitrary color gamut information (as color primary value of RGBW, color_primary_A_x or color_primary_A_y, where, A is one of R, G, B and W) of the enhancement layer video data transmitted in the SEI message may be used.

Operation of the receiver according to the embodiment of the present invention will now be described again.

The signaling information according to the above-described two embodiments may be included in the system level and the SEI message and transmitted.

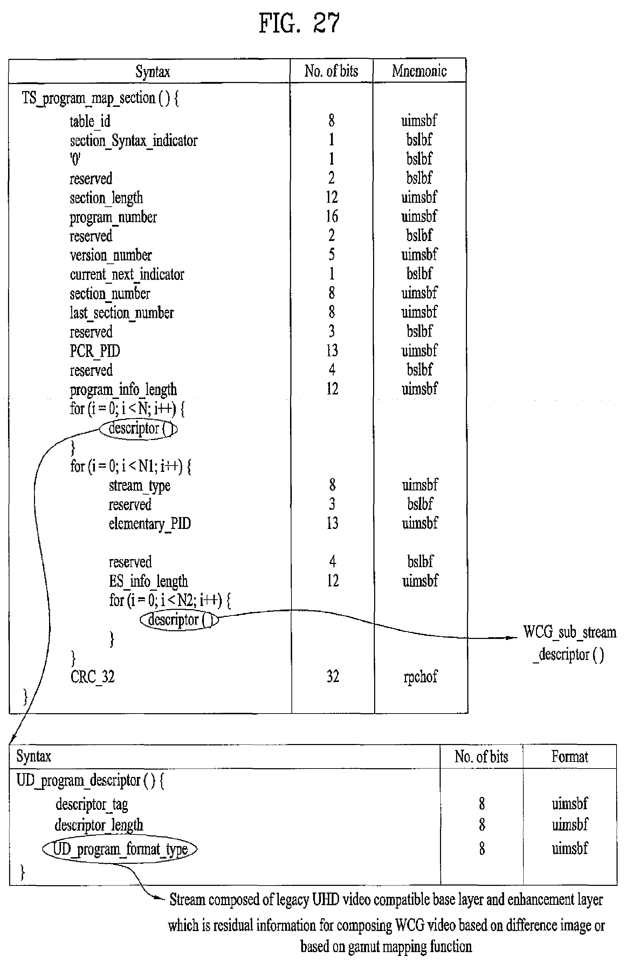

FIG. 27 is a diagram showing broadcast signaling information as one embodiment of the present invention and may correspond to FIG. 8 or 18.

As shown, a program level descriptor may include a descriptor (UD_program_descriptor) for identifying a program composing scalable WCG video using color-gamut-mapped data and an enhancement layer or by upscaling of a base layer compatible with legacy UHD video.

In this example, the descriptor (UD_program_descriptor) for identifying the program capable of composing scalable WCG video may include a field (UD_program_fbrmat_type) for identifying a program/service (0x08) capable of composing WCG video using data obtained by updating the color bit depth of base layer video data compatible with legacy UHD video and WCG enhancement layer video data and a program/service format (0x09) capable of composing WCG video using color-gamut-mapped data of base layer video data compatible with legacy UHD video and WCG enhancement layer video data.

As disclosed, the stream level descriptor may include coding information of a stream composing scalable WCG video.

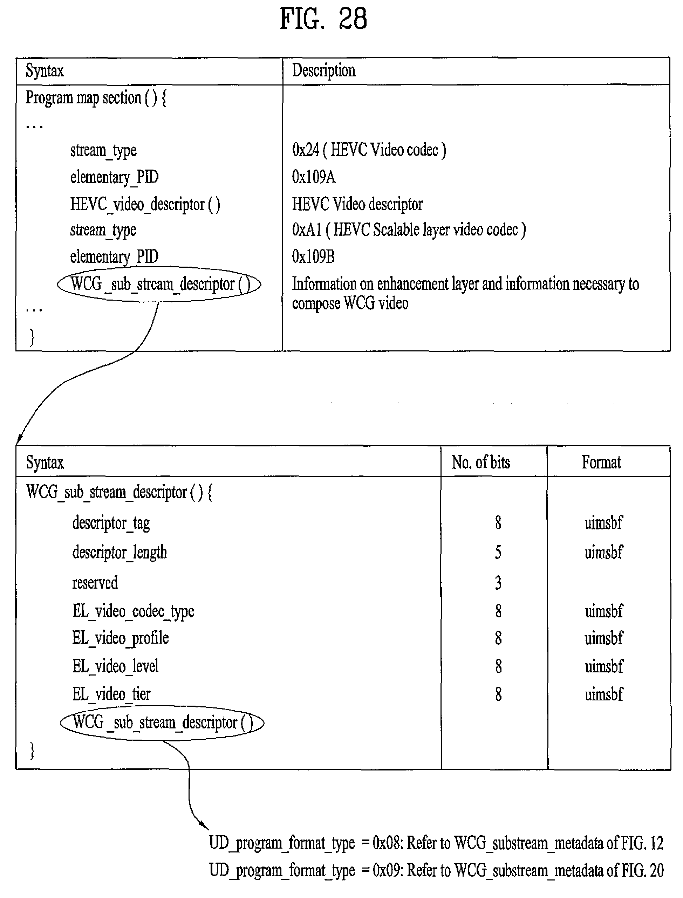

FIG. 28 is a diagram showing a detailed example including a descriptor for signaling scalable WCG video included in such broadcast signaling information as one embodiment of the present invention. This figure may correspond to FIG. 10 or 19.

According to one embodiment of the present invention, a WCG_sub_stream_descriptor which is a descriptor for signaling scalable WCG video is a descriptor including information on a stream composing a WCG video service.

The EL_video_codec_type field, the EL_video_profile field, the EL_video_level field, the EL_video_level field and the EL_video_tier field were described with reference to FIG. 10 or 19.

The metadata (WCG_substream_metadata()) for signaling a scalable WCG video stream of the descriptor according to one embodiment of the present invention is shown in FIG. 12 or 20.

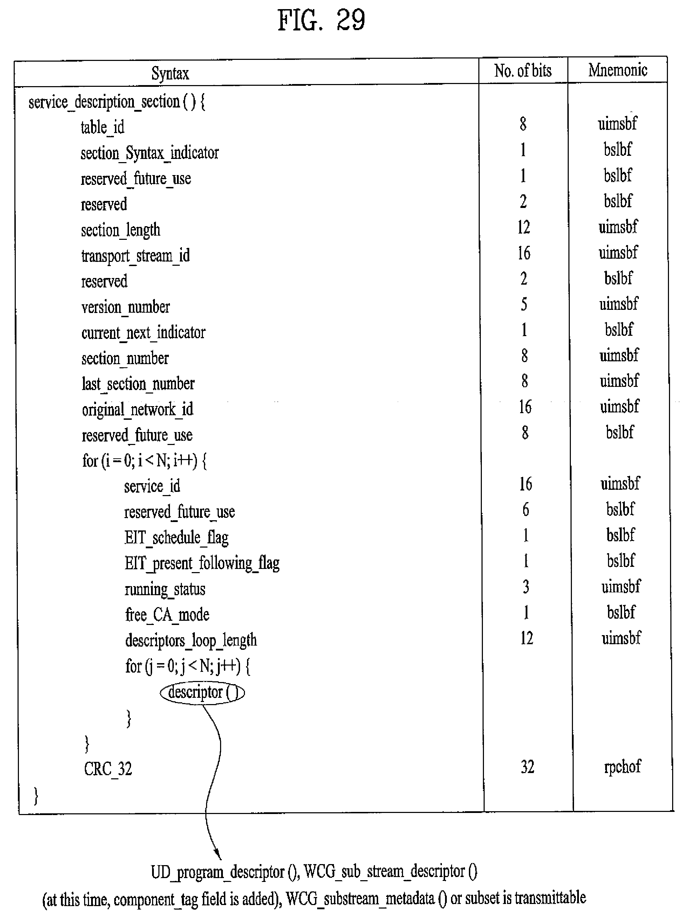

FIG. 29 is a diagram showing another example in which signaling information for signaling scalable WCG video is included in broadcast signaling information as one embodiment of the present invention. Here, a service description table (SD) is shown as broadcast signaling information. Each field will now be described.

A table_id field indicates the identifier of the table.

A section_syntax_indicator field is a 1-bit field set to 1 with respect to the SDT table section.(section_syntax_indicator: The section_syntax_indicator is a 1-bit field which shall be set to "1")

A section_length field indicates the length of the section in bytes. (section_length: This is a 12-bit field, the first two bits of which shall be "00". It specifies the number of bytes of the section, starting immediately following the section_length field and including the CRC. The section_length shall not exceed 1 021 so that the entire section has a maximum length of 1 024 bytes.)

A transport_stream_id field indicates a TS identifier provided by this SDT, for identification from other multiplex within the delivery system. (transport_stream_id: This is a 16-bit field which serves as a label for identification of the TS, about which the SDT informs, from any other multiplex within the delivery system.)

A version_number field indicates the version number of this sub table. (version_number: This 5-bit field is the version number of the sub_table. The version_number shall be incremented by 1 when a change in the information carried within the sub_table occurs. When it reaches value "31", it wraps around to "0". When the current_next_indicator is set to "1", then the version_number shall be that of the currently applicable sub_table. When the current_next_indicator is set to "0", then the version_number shall be that of the next applicable sub_table.)

A current_next_indicator field indicates whether this sub table is applicable currently or next. (current_next_indicator: This 1-bit indicator, when set to "1" indicates that the sub_table is the currently applicable sub_table. When the bit is set to "0", it indicates that the sub_table sent is not yet applicable and shall be the next sub_table to be valid.)

A section_number field indicates the number of the section. (section_number: This 8-bit field gives the number of the section. The section_number of the first section in the sub_table shall be "0x00". The section_number shall be incremented by 1 with each additional section with the same table_id, transport_stream_id, and original_network_id.)

A last_section_number field indicates the number of a last section. (last_section_number: This 8-bit field specifies the number of the last section (that is, the section with the highest section_number) of the sub_table of which this section is part.)

An original_network_id field indicates an identifier for identifying the network id of the delivery system.

(original_network_id: This 16-bit field gives the label identifying the network_id of the originating delivery system.)

A service_id field indicates the service identifier within the TS. (service_id: This is a 16-bit field which serves as a label to identify this service from any other service within the TS. The service_id is the same as the program_number in the corresponding program_map_section.)

An EIT_schedule_flag field may indicate whether EIT schedule information for the service is present in the current TS. (EIT_schedule_flag: This is a 1-bit field which when set to "1" indicates that EIT schedule information for the service is present in the current TS, see TR 101 211 [i.2] for information on maximum time interval between occurrences of an EIT schedule sub_table). If the flag is set to 0 then the EIT schedule information for the service should not be present in the TS.)

An EIT_present_following_flag field may indicate whether EIT_present_following information for the service is present in the current TS. (EIT_present_following_flag: This is a 1-bit field which when set to "1" indicates that EIT_present_following information for the service is present in the current TS, see TR 101 211 [i.2] for information on maximum time interval between occurrences of an EIT present/following sub_table. If the flag is set to 0 then the EIT present/following information for the service should not be present in the TS.)

A running_status field may indicate the status of the service as defined in Table 6 of DVB-SI document. (running_status: This is a 3-bit field indicating the status of the service as defined in table 6. For an NVOD reference service the value of the running_status shall be set to "0".)

A free_CA_mode field indicates whether all component streams of the service are scrambled. (free_CA_mode: This 1-bit field, when set to "0" indicates that all the component streams of the service are not scrambled. When set to "1" it indicates that access to one or more streams may be controlled by a CA system.)

A descriptors_loop_length field indicates the length of the following descriptor. (descriptors_loop_length: This 12-bit field gives the total length in bytes of the following descriptors)

A CRC_32 field is a 32-bit field including a CRC value. (CRC_32: This is a 32-bit field that contains the CRC value that gives a zero output of the registers in the decoder).

The descriptor of the SDT may include information capable of describing a scalable WCG video service, for example, the descriptor (UD_program_descriptor) shown in FIG. 8 or 18, the descriptor (WCG_sub_stream_descriptor) shown in FIG. 10 or the metadata (WCG_substream_metadata) shown in FIG. 12 or 20 or some thereof. Accordingly, according to the embodiment of the present invention, signaling information describing the described scalable WCG video service may be included.

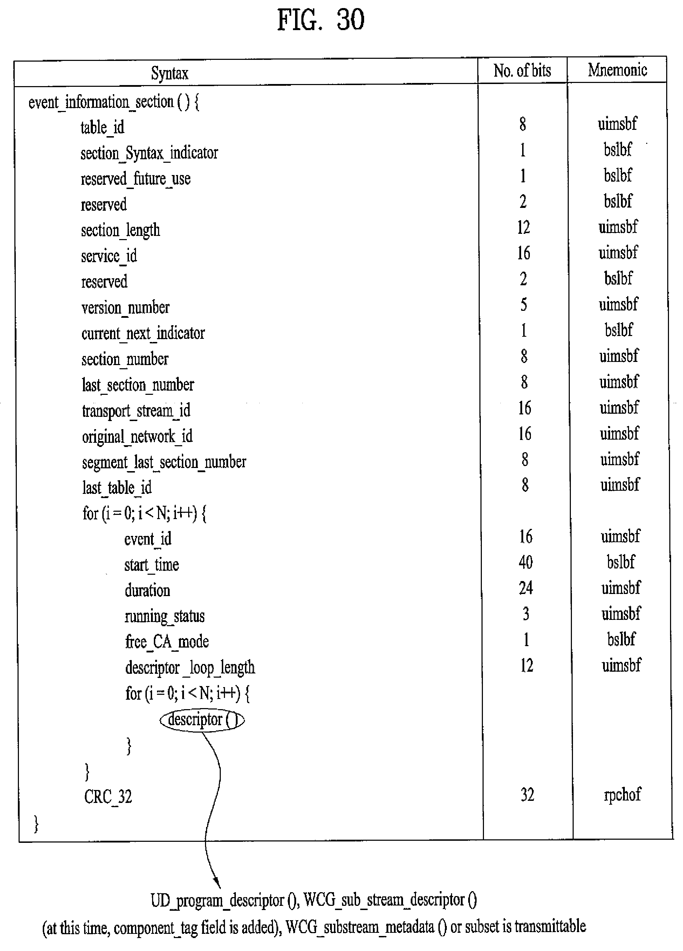

FIG. 30 is a diagram showing another example in which signaling information for signaling scalable WCG video is included in broadcast signaling information as one embodiment of the present invention. Here, an event information table (EIT) is shown as broadcast signaling information.

The EIT may follow ETSI EN 300 468. Using this, each field will now be described.

A table_id indicates a table identifier.

A section_syntax_indicator field is a 1-bit field set to 1 with respect to an EIT table section. (section_syntax _indicator: The section_syntax_indicator is a 1-bit field which shall be set to "1".)

A section_length field indicates the length of the section in bytes. (section_length: This is a 12-bit field. It specifies the number of bytes of the section, starting immediately following the section_length field and including the CRC. The section_length shall not exceed 4 093 so that the entire section has a maximum length of 4 096 bytes.)

A service_id field indicates a service identifier within a TS. (service_id: This is a 16-bit field which serves as a label to identify this service from any other service within a TS. The service_id is the same as the program_number in the corresponding program_map_section.)

A version_number field indicates the version number of this sub table. (version_number: This 5-bit field is the version number of the sub_table. The version_number shall be incremented by 1 when a change in the information carried within the sub_table occurs. When it reaches value 31, it wraps around to 0. When the current_next_indicator is set to "1", then the version_number shall be that of the currently applicable sub_table. When the current_next_indicator is set to "0", then the version_number shall be that of the next applicable sub_table.)

A current_next_indicator field indicates whether this sub table is applicable currently or next. (current_next_indicator: This 1-bit indicator, when set to "1" indicates that the sub_table is the currently applicable sub_table. When the bit is set to "0", it indicates that the sub_table sent is not yet applicable and shall be the next sub_table to be valid.)

A section_number field indicates the number of the section. (section_number: This 8-bit field gives the number of the section. The section_number of the first section in the sub_table shall be "0x00". The section_number shall be incremented by 1 with each additional section with the same table_id, service_id, transport_stream_id, and original_network_id. In this case, the sub_table may be structured as a number of segments. Within each segment the section_number shall increment by 1 with each additional section, but a gap in numbering is permitted between the last section of a segment and the first section of the adjacent segment.)

A last_section_number field indicates the number of the last section. (last_section_number: This 8-bit field specifies the number of the last section (that is, the section with the highest section_number) of the sub_table of which this section is part.)

A transport_stream_id field indicates a TS identifier provided by this SDT, for identification from other multiplex within the delivery system. (transport_stream_id: This is a 16-bit field which serves as a label for identification of the TS, about which the EIT informs, from any other multiplex within the delivery system.)

An original_network_id field indicates an identifier for identifying the network id in the delivery system. (original_network_id: This 16-bit field gives the label identifying the network_id of the originating delivery system.)

A segment_last_section_number field indicates the number of the last section of this segment of this sub table. (segment_last_section_number: This 8-bit field specifies the number of the last section of this segment of the sub_table. For sub_tables which are not segmented, this field shall be set to the same value as the last_section_number field.)

A last_table_id field is the 8-bit field that identifies the last table_id used (see table 2).)

An event_id field indicates the identification number of the event. (event_id: This 16-bit field contains the identification number of the described event (uniquely allocated within a service definition)

A start_time field includes the start time of the event. (start_time: This 40-bit field contains the start time of the event in Universal Time, Co-ordinated (UTC) and Modified Julian Date (MJD) (see annex C). This field is coded as 16 bits giving the 16 LSBs of MJD followed by 24 bits coded as 6 digits in 4-bit Binary Coded Decimal (BCD). If the start time is undefined (e.g. for an event in a NVOD reference service) all bits of the field are set to "1".)

A running_status field indicates the status of the event as defined in table 6 of the DVB SI document. (running_status: This is a 3-bit field indicating the status of the event as defined in table 6. For an NVOD reference event the value of the running_status shall be set to "0".)

A free_CA_mode field indicates whether all the component streams of the service are scrambled. (free_CA_mode: This 1-bit field, when set to "0" indicates that all the component streams of the event are not scrambled. When set to "1" it indicates that access to one or more streams is controlled by a CA system.)

A descriptors_loop_length field indicates the length of the following descriptor. (descriptors_loop_length: This 12-bit field gives the total length in bytes of the following descriptors.)

A CRC_32 is a 32-bit field including a CRC value. (CRC_32: This is a 32-bit field that contains the CRC value that gives a zero output of the registers in the decoder)

A descriptors_loop_length field may include a UHD_program_type_descriptor shown in FIG. 16 and a UHD_composition_descriptor shown in FIG. 18, 24 or 25 according to the embodiment of the present invention at the next descriptor location.

The descriptor of the EIT may include information capable of describing a scalable WCG video service and, for example, may include the descriptor (UD_program_descriptor) shown in FIG. 8 or 18, the descriptor (WCG_sub_stream_descriptor) shown in FIG. 8 or 18 or the metadata shown in FIG. 12 or 20 (WCG_substream_metadata), or some thereof. Accordingly, according to the embodiment of the present invention, signaling information describing the scalable WCG video service may be included.

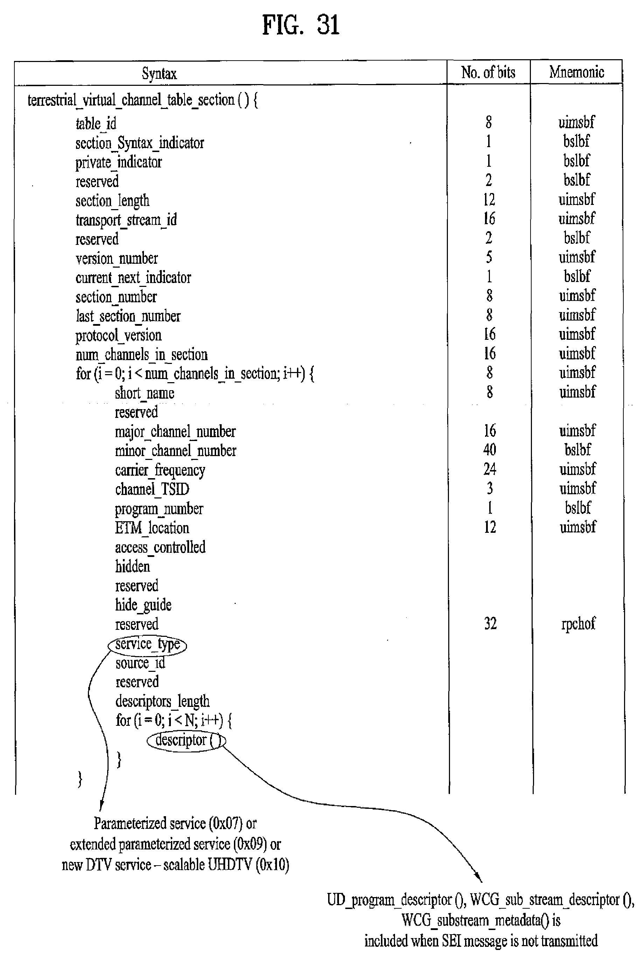

FIG. 31 is a diagram showing another example in which signaling information for signaling scalable WCG video is included in broadcast signaling information as one embodiment of the present invention. Here, a virtual channel table (VCT) is shown as broadcast signaling information. Each field will now be described.

The VCT may follow the ATSC PSIP standard. According to ATSC PSIP, the description of each field is as follows. Each bit will now be described.

A table_id field indicates an 8-bit unsigned integer number indicating the type of the table section. (table_id - An 8-bit unsigned integer number that indicates the type of table section being defined here. For the terrestrial_virtual_channel_table_section(), the table_id shall be 0xC8)

A section_syntax_indicator field is a 1-bit field set to 1 with respect to the VCT table section. (section_syntax_indicator - The section_syntax_indicator is a one-bit field which shall be set to '1' for the terrestrial_virtual_channel_table_section()).

A private_indicator field is set to 1. (private_indicator - This 1-bit field shall be set to '1')

A section_length field indicates the length of the section in bytes. (section_length - This is a twelve bit field, the first two bits of which shall be '00'.. It specifies the number of bytes of the section, starting immediately following the section_length field, and including the CRC.)

A transport_stream_id field indicates an MPEG -TS ID as in the PAT capable of identifying the TVCT. (transport_stream_id - The 16-bit MPEG-2 Transport Stream ID, as it appears in the Program Association Table (PAT) identified by a PID value of zero for this multiplex. The transport_stream_id distinguishes this Terrestrial Virtual Channel Table from others that may be broadcast in different PTCs.)

A version_number field indicates the version number of the VCT. (version_number - This 5 bit field is the version number of the Virtual Channel Table. For the current VCT (current_next_indicator = '1'), the version number shall be incremented by 1 whenever the definition of the current VCT changes. Upon reaching the value 31, it wraps around to 0. For the next VCT (current_next_indicator = '0'), the version number shall be one unit more than that of the current VCT (also in modulo 32 arithmetic). In any case, the value of the version_number shall be identical to that of the corresponding entries in the MGT)

A current_next_indicator field indicates whether the VCT table is applicable currently or next. (current_next_indicator - A one-bit indicator, which when set to '1' indicates that the Virtual Channel Table sent is currently applicable. When the bit is set to '0', it indicates that the table sent is not yet applicable and shall be the next table to become valid. This standard imposes no requirement that "next" tables (those with current_next_indicator set to '0') must be sent. An update to the currently applicable table shall be signaled by incrementing the version_number field)

A section_number field indicates the number of the section. (section_number - This 8 bit field gives the number of this section. The section_number of the first section in the Terrestrial Virtual Channel Table shall be 0x00. It shall be incremented by one with each additional section in the Terrestrial Virtual Channel Table)

A last_section_number field indicates the number of the last section. (last_section_number - This 8 bit field specifies the number of the last section (that is, the section with the highest section_number) of the complete Terrestrial Virtual Channel Table.)

A protocol_version field indicates the protocol version for parameters which may be defined differently from the current protocol in the future. (protocol_version - An 8-bit unsigned integer field whose function is to allow, in the future, this table type to carry parameters that may be structured differently than those defined in the current protocol. At present, the only valid value for protocol_version is zero. Non-zero values of protocol_version may be used by a future version of this standard to indicate structurally different tables)

A num_channels_in_section field indicates the number of virtual channels of the VCT. (num_channels_in_section - This 8 bit field specifies the number of virtual channels in this VCT section. The number is limited by the section length.)

A short_name field indicates the name of the vertical channel. (short_name - The name of the virtual channel, represented as a sequence of one to seven 16-bit code values interpreted in accordance with the UTF-16 representation of Unicode character data. If the length of the name requires fewer than seven 16-bit code values, this field shall be padded out to seven 16-bit code values using the Unicode NUL character (0x0000). Unicode character data shall conform to The Unicode Standard, Version 3.0 [13].)

A major_channel_number field indicates the number of major channels associated with the virtual channel. (major_channel_number - A 10-bit number that represents the "major" channel number associated with the virtual channel being defined in this iteration of the "for" loop. Each virtual channel shall be associated with a major and a minor channel number. The major channel number, along with the minor channel number, act as the user's reference number for the virtual channel. The major_channel_number shall be between 1 and 99. The value of major_channel_number shall be set such that in no case is a major_channel_number/ minor_channel_number pair duplicated within the TVCT. For major_channel_number assignments in the U.S., refer to Annex B.)

A minor_channel_number field indicates the number of minor channels associated with the virtual channel. (minor_channel_number - A 10-bit number in the range 0 to 999 that represents the "minor" or "sub"- channel number. This field, together with major_channel_number, performs as a two-part channel number, where minor_channel_number represents the second or right-hand part of the number. When the service_type is analog television, minor_channel_number shall be set to 0. Services whose service_type is ATSC_digital_television, ATSC_audio_only, or unassociated/ small_screen_service shall use minor numbers between 1 and 99. The value of minor_channel_number shall be set such that in no case is a major_channel_number/ minor_channel_number pair duplicated within the TVCT. For other types of services, such as data broadcasting, valid minor virtual channel numbers are between 1 and 999.)

A modulation_mode mode indicates the modulation mode of the carrier associated with the virtual channel. (modulation_mode - An 8-bit unsigned integer number that indicates the modulation mode for the transmitted carrier associated with this virtual channel. Values of modulation_mode shall be as defined in Table 6.5. For digital signals, the standard values for modulation mode (values below 0x80) indicate transport framing structure, channel coding, interleaving, channel modulation, forward error correction, symbol rate, and other transmission-related parameters, by means of a reference to an appropriate standard. The modulation_mode field shall be disregarded for inactive channels)

A carrier_frequency field is a field capable of identifying the carrier frequency. (carrier_frequency - The recommended value for these 32 bits is zero. Use of this field to identify carrier frequency is allowed, but is deprecated.)

A channel_TSID field indicates an MPEG-2 TS ID associated with the TS carrying the MPEG-2 program referenced by the virtual channel. (channel_TSID - A 16-bit unsigned integer field in the range 0x0000 to 0xFFFF that represents the MPEG-2 Transport Stream ID associated with the Transport Stream carrying the MPEG-2 program referenced by this virtual channel8. For inactive channels, channel_TSID shall represent the ID of the Transport Stream that will carry the service when it becomes active. The receiver is expected to use the channel_TSID to verify that any received Transport Stream is actually the desired multiplex. For analog channels (service_type 0x01), channel_TSID shall indicate the value of the analog TSID included in the VBI of the NTSC signal. Refer to Annex D Section 9 for a discussion on use of the analog TSID)

A program_number field indicates an integer number defined in association with this virtual channel.

(program_number - A 16-bit unsigned integer number that associates the virtual channel being defined here with the MPEG-2 PROGRAM ASSOCIATION and TS PROGRAM MAP tables. For virtual channels representing analog services, a value of 0xFFFF shall be specified for program_number. For inactive channels (those not currently present in the Transport Stream), program_number shall be set to zero. This number shall not be interpreted as pointing to a Program Map Table entry.)

An ETM_location field indicates the existence and location of the ETM. (ETM_location - This 2-bit field specifies the existence and the location of an Extended Text Message (ETM) and shall be as defined in Table 6.6.)

An access_controlled field indicates that the event associated with the virtual channel may be access controlled. (access_controlled - A 1-bit Boolean flag that indicates, when set, that the events associated with this virtual channel may be access controlled. When the flag is set to '0', event access is not restricted)

A hidden field indicates that the virtual channel is not accessed by the user by direct entry of the channel number. (hidden - A 1-bit Boolean flag that indicates, when set, that the virtual channel is not accessed by the user by direct entry of the virtual channel number. Hidden virtual channels are skipped when the user is channel surfing, and appear as if undefined, if accessed by direct channel entry. Typical applications for hidden channels are test signals and NVOD services. Whether a hidden channel and its events may appear in EPG display apparatuses depends on the state of the hide_guide bit.)

A hide_guide field indicates that the virtual channel and the event thereof may appear in the EPG. (hide_guide - A Boolean flag that indicates, when set to '0' for a hidden channel, that the virtual channel and its events may appear in EPG display apparatuses. This bit shall be ignored for channels which do not have the hidden bit set, so that non-hidden channels and their events may always be included in EPG display apparatuses regardless of the state of the hide_guide bit. Typical applications for hidden channels with the hide_guide bit set to '1' are test signals and services accessible through application-level pointers.)

A service_type field indicates a service type identifier. (service_type - This 6-bit field shall carry the Service Type identifier. Service Type and the associated service_type field are defined in A/53 Part 1 [1] to identify the type of service carried in this virtual channel. Value 0x00 shall be reserved. Value 0x01 shall represent analog television programming. Other values are defined in A/53 Part 3 [3], and other ATSC Standards may define other Service Types9)

A source_id field indicates an identification number for identifying the programming source associated with the virtual channel. (source_id - A 16-bit unsigned integer number that identifies the programming source associated with the virtual channel. In this context, a source is one specific source of video, text, data, or audio programming. Source ID value zero is reserved. Source ID values in the range 0x0001 to 0x0FFF shall be unique within the Transport Stream that carries the VCT, while values 0x1000 to 0xFFFF shall be unique at the regional level. Values for source_ids 0x1000 and above shall be issued and administered by a Registration Authority designated by the ATSC.)

A descriptors_length field indicates the length of the following descriptor. (descriptors_length - Total length (in bytes) of the descriptors for this virtual channel that follows)

The descriptor() may include descriptors. (descriptor() - Zero or more descriptors, as appropriate, may be included.)

The service_type field of the VCT may include service type information for identifying a UHD service, a scalable UHD service scalable WCG video service. For example, if the service_type field is 0x07, 0x09 or 0x10, information indicating that this service is provided may be signaled.

The descriptor of the VCT may include information capable of describing a scalable WCG video service, for example, the descriptor (UD_program_descriptor) shown in FIG. 8 or 18, the descriptor (WCG_sub_stream_descriptor) shown in FIG. 10 or the metadata (WCG_substream_metadata) shown in FIG. 12 or 20 or some thereof. Accordingly, according to the embodiment of the present invention, signaling information describing the described scalable WCG video service may be included.

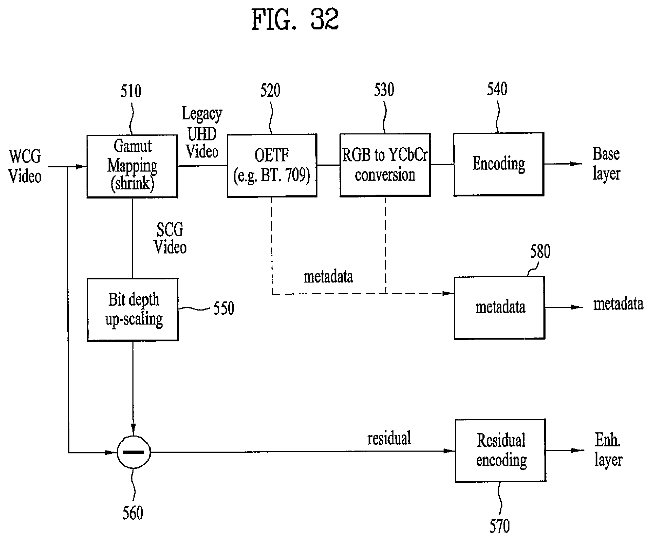

FIG. 32 is a diagram showing one example of a signal transmission apparatus according to an embodiment of the present invention. The example of the present invention will be described with reference to this drawing.

In this embodiment, in order to transmit scalable WCG video, base layer video data compatible with legacy UHD video and enhancement layer video data may be encoded and transmitted.

The signal transmission apparatus according to one embodiment of the present invention includes a video encoder. The video encoder may include a color gamut mapping unit 510, a first color conversion unit 520, a second color conversion unit 530, a first encoder 540, an upscaling unit 550, a calculator 560, a second encoder 570 and a metadata generator 580.

The color gamut mapping unit 510 may perform color gamut mapping with respect to scalable WCG video to output legacy UHD video.

The color gamut mapping unit 510 may map the color gamut of scalable WCG video, for mapping to the color gamut capable of being expressed by the legacy display with respect to the scalable WCG video. The color gamut mapping unit 510 maps the overall color expression range to a predetermined space and outputs UHD video capable of being output by the legacy receiver. The transmission unit outputs information thereon in the form of metadata.

The first color conversion unit 520 performs video format conversion for transmission according to the color gamut with respect to the color-gamut-mapped video. For example, a luma signal may be maintained according to visual properties upon transmitting color video, but a chroma signal may be subjected to sub-sampling. When such color conversion is performed, the transfer curve of video is changed. The transfer curve (EOTF) conversion may be performed to suit the legacy receiver.

The second conversion unit 530 may perform YcbCr conversion, for display on the legacy UHD display apparatus.

The first color conversion unit 520 and the second color conversion unit 530 may operate only when the video data is necessary.

The first encoder 540 encodes the video data output from the color gamut mapping unit 510, the first color conversion unit 520 or the second color conversion unit 530 into base layer video data using a codec capable of being processed by the legacy UHD receiver, such as HEVC, and outputs the encoded data, in order to transmit UHD video capable of being output on the legacy display apparatus.

The upscaling unit 550 performs bit depth down sampling with respect to UHD video capable of being output from the legacy receiver and upscales the bit depth of video (SCG) before color conversion such as OETF to enable the video to have the same bit depth as the original scalable WCG video.

The calculator 560 generates a difference between the original scalable WCG video and the video data output from the upscaling unit 550 as residual data.

The second encoder 570 encodes the residual data into enhancement data and outputs the enhancement data.

The metadata generator 580 generates metadata for the legacy UHD video generated via color gamut mapping. The generated metadata for the legacy UHD video may include information on color gamut conversion and color conversion (EOTF conversion or YcbCr conversion matrix) performed by the color gamut mapping unit 510, the first color conversion unit 520 and the second color conversion unit 530.

The metadata generator 580 may generate the information shown in FIGs. 11 to 17 and FIGs. 19 to 26.

Although not shown in the drawing, the signal transmission apparatus according to one embodiment of the present invention may further include a signaling information encoder, a multiplexer and a transmission unit.

The signaling information encoder may encode signaling information capable of composing scalable WCG video data. The information capable of being encoded by the signaling information encoder is shown in FIGs. 8 to 10, FIG. 18 and FIGs. 17 to 31.

The multiplexer may multiplex the video data output by the video encoder and the base layer video data and enhancement video data encoded by the video encoder and outputs the multiplexed stream.

The transmission unit may perform channel coding with respect to the multiplexed stream and transmit the stream.

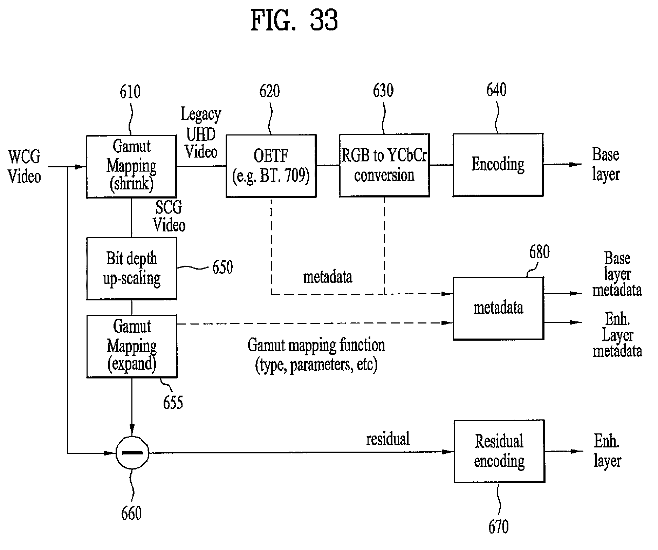

FIG. 33 is a diagram showing an example of another signal transmission apparatus according to an embodiment of the present invention. The example of a signal transmission apparatus will now be described with reference to this figure.

In this embodiment, video may be encoded and transmitted to compose WCG video using the enhancement layer video data and the color-gamut-mapped data of the base layer video data compatible with the legacy UHD video.

The example of the signal transmission apparatus according to one embodiment of the present invention may include a video encoder, a signaling information encoder, a multiplexer and a transmission unit.

The video encoder may include a first color gamut mapping unit 610, a first color conversion unit 620, a second color conversion unit 630, a first encoder 640, an upscaling unit 650, a second color gamut mapping unit 655, a calculator 660, a second encoder 670 and a metadata generator 680.

The color gamut mapping unit 610 may perform color gamut mapping with respect to scalable WCG video to output legacy UHD video.

The first color conversion unit 620 and the second color conversion unit 630 may perform color conversion similar to that described above. For example, a luma signal may be maintained according to visual properties upon transmitting color video, but a chroma signal may be subjected to sub-sampling. When such color conversion is performed, the transfer curve of video is changed. The transfer curve (EOTF) conversion may be performed to suit the legacy receiver.

The second conversion unit 630 may perform YcbCr conversion, for display on the legacy UHD display apparatus.

The first color conversion unit 620 and the second color conversion unit 630 may operate only when the video data is necessary.

The first encoder 640 compresses the video data output from the color conversion units 620 and 630 into base layer video data using a codec capable of being processed by the legacy UHD receiver, such as HEVC, with respect to scalable color gamut video and outputs the compressed data, in order to transmit UHD video capable of being output on the legacy display apparatus.

The upscaling unit 650 performs bit depth down sampling with respect to UHD video capable of being output from the legacy receiver and upscales the bit depth of video (SCG) before color conversion such as OETF to enable the video to have the same bit depth as the original scalable WCG video.

The second color gamut mapping unit 655 performs color gamut mapping with respect to the upscaled video output by the upscaling unit 650, expands the color gamut of base layer video data, and converts video similarly to the color gamut of WCG video. In this case, since the video upscaled by the upscaling unit 650 may be mapped to the color gamut subjected to bit depth extension, quantization errors may occur. Accordingly, data capable of correcting the errors may be generated by the metadata generator or may be included in the residual data.

The calculator 660 generates a difference between the original scalable WCG video and the video data output from the upscaling unit 650 as residual data.

The second encoder 670 encodes the residual data into enhancement data and outputs the enhancement data.

The metadata generator 680 generates metadata for the legacy UHD video generated via color gamut mapping. The generated metadata for the legacy UHD video may include information on color gamut conversion and color conversion (EOTF conversion or YcbCr conversion matrix) performed by the color gamut mapping unit 610, the first color conversion unit 620 and the second color conversion unit 630. The metadata generator 680 transmits information for composing enhancement layer video data in the form of metadata. As shown, the metadata may include not only information related to a gamut mapping function (gamut mapping type, parameter, etc.) but also information on base layer video data, a composition method, etc.

Similarly, the metadata generator 680 may generate the information shown in FIGs. 11 to 17 and FIGs. 19 to 26.

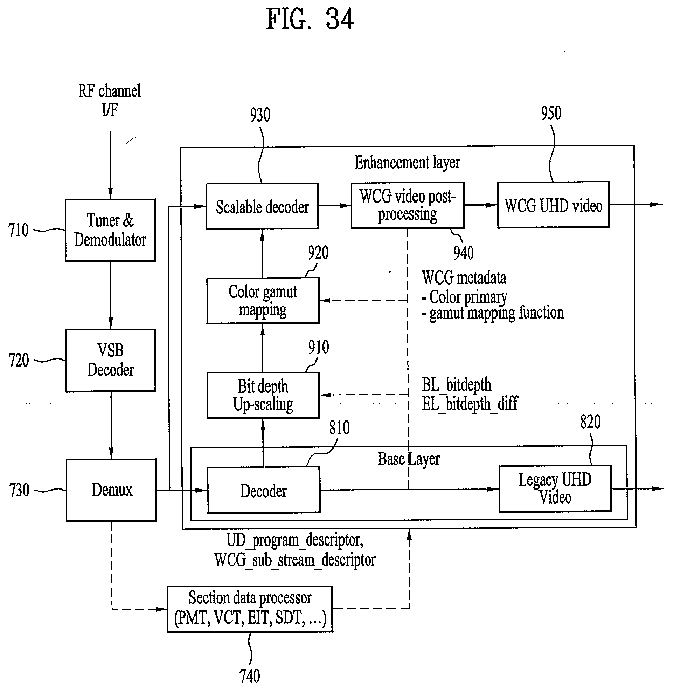

FIG. 34 is a diagram showing an example of a signal reception apparatus according to an embodiment of the present invention.

An example of a signal reception apparatus according to the embodiment of the present invention includes a reception unit 710, a channel decoder 720, a demultiplexer 730, a signaling information decoder 740 and a video decoder.

The video decoder includes a base layer decoder and an enhancement layer decoder.

For example, the base layer decoder 810 decodes the base layer video data output by the demultiplexer 730 and outputs legacy UHD video data 820.

The enhancement layer decoder may include an upscaling unit 910, a color gamut mapping unit 920, a scalable decoder 930 and a WCG post-processing unit 940.

First, the reception unit 710 may tune to a broadcast signal and demodulate a signal frame included in the broadcast signal.

The channel decoder 720 may channel-decode data included in the signal frame.

The demultiplexer 730 demultiplexes the channel-decoded data and outputs the demultiplexed signaling information. For example, the demultiplexer 730 may demultiplex the broadcast signaling information into streams of data and base layer video data or enhancement layer video data.

The signaling information decoder 740 may decode the demultiplexed signaling information. Here, the examples of the information capable of being decoded by the signaling information decoder are shown in FIGs. 8 to 10, FIG. 18 and FIGs. 27 to 31. For example, the signaling information decoder 740 may confirm that the service is a scalable WCG video service using the program level descriptor (UD_program_descriptor) or the stream descriptor (WCG_sub_stream_descriptor) and confirm codec information, profile information, level information, tier information, etc. of the video of the stream.

The video decoder may decode the demultiplexed base layer video data or enhancement layer video data. In this case, signaling information included in the base layer video data or enhancement layer video data may be referenced. The examples of the signaling information decoded by the video decoder are shown in FIGs. 11 to 17 and FIGs. 19 to 26.

The video decoder may provide scalable WCG video or legacy UHD video according to the capacity of the display apparatus of the receiver based on the signaling information included in the base layer video data or enhancement layer video data and the signaling information demultiplexed by the signaling information decoder 740.

For example, according to the embodiment of the present invention, in a receiver having a legacy display apparatus, the video decoder may output legacy UHD video compatible with the legacy display apparatus.

According to the embodiment of the present invention, in the receiver having the display apparatus capable of providing a WCG service, the video decoder may compose WCG using data obtained by updating the color bit depth of the base layer video data compatible with legacy UHD video and the enhancement layer video data. Alternatively, the video decoder may compose WCG video using the color-gamut-mapped data of the base layer video data compatible with the legacy UHD video and the enhancement layer video data.

This will now be described.

In a receiver having a legacy display apparatus, the base layer decoder 810 may decode the base layer video data demultiplexed by the demultiplexer 730. The base layer video data decoded by the base layer decoder 810 may be video data 820 compatible with legacy UHD video.

The base layer decoder 810 decodes the video data 820 compatible with the legacy UHD video based on the signaling information decoded by the signaling information decoder 740 and the signaling information included in the base layer video data and outputs the decoded data to the display apparatus.

The base layer video decoder 810 shown in this figure may correspond to the base layer decoder and the color conversion unit (EOTF) shown in FIG. 2.

In a receiver having a display apparatus capable of providing a WCG service, the base layer decoder 810 may decode the base layer video data demultiplexed by the demultiplexer 730 based on the signaling information demultiplexed by the signaling information decoder 740 and the signaling information included in the base layer video data or the enhancement layer video data.

The enhancement layer decoder includes a base layer decoder and may further include an upscaling unit 910, a color gamut mapping unit 920, a scalable decoder 930 and a post-processing unit 940.

The enhancement layer decoder may decode the enhancement layer video demultiplexed by the demultiplexer 730 based on the signaling information demultiplexed by the signaling information decoder 740 and the signaling information included in the base layer video data or the enhancement layer video data.

The upscaling unit 910 may upscale the color bit depth of the base layer video data decoded by the base layer decoder 810. In this case, the bit depth information (BL_bitdepth) of the base layer video data included in the metadata of the video data and bit depth difference information (EL_bitdepth_diff) of the base layer video data may be used.

The color gamut mapping unit 920 may map the color gamut of the base layer video data decoded by the base layer decoder 8910. In this case, color primary information, gamut mapping function information, etc. for mapping of the color gamut included in the metadata of the video data may be used.

The scalable video decoder 930 may output WCG video using the data obtained by upscaling the color bit depth of the base layer video data, and the enhancement layer video data.

Alternatively, the scalable video decoder 930 may output WCG video using data, to which the color gamut of the base layer video data is mapped, and the enhancement layer video data.

The post-processing unit 940 may output WCG UHD video 950 obtained by post-processing the video data decoded by the scalable video decoder 930 using the signaling information included in the video data.

The enhancement layer decoder shown in this figure may correspond to the base layer decoder, the color conversion unit (EOTF), the upscaler, the WCG video composition unit and the post-processing unit of FIG. 2.

Accordingly, according to the embodiment of the present invention, legacy UHD video or WCG video may be output according to the display capabilities of the receiver.

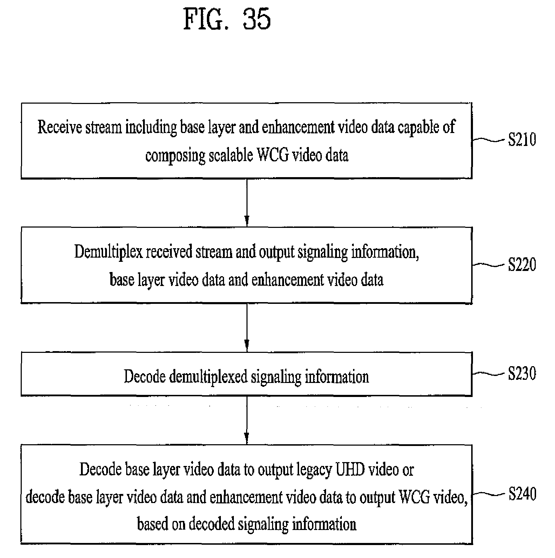

FIG. 35 is a diagram showing an example of a signal reception method according to an embodiment of the present invention. The example of the signal reception method according to the embodiment of the present invention will now be described with reference to this figure.

A stream including base layer video data and enhancement layer video data capable of composing scalable WCG video data is received (S210).

The received stream is demultiplexed to output signaling information, base layer video data and enhancement layer video data (S220).

The demultiplexed signaling information is decoded (S230).

The base layer video data is decoded based on the decoded signaling information to output legacy UHD video, or the base layer video data and the enhancement layer video data are decoded to output WCG video (S240).

According to the embodiment of the present invention, it is possible to display a video service based on a wide color gamut regardless of the display apparatus.

According to the embodiment of the present invention, it is possible to provide compatible WCG content even at a legacy receiver.

According to the embodiment of the present invention, it is possible to provide a video service based on a wide color gamut using a plurality of display apparatuses.

According to the embodiment of the present invention, it is possible to provide a broadcast service capable of compatibly expressing WCG information of content.

[Mode for Invention]

Various embodiments have been described in the best mode for carrying out the invention.

[Industrial Applicability]

The present invention is repeatedly available in a broadcast and video signal processing.

**Claims**

1. A signal transmission method comprising:

encoding base layer video data and enhancement video data for providing a scalable wide color gamut (WCG) video service;

generating signaling information for rendering scalable WCG video data of the scalable WCG video service;

outputting a stream obtained by multiplexing the generated signaling information, the encoded base layer video data and the encoded enhancement video data; and

transmitting the multiplexed stream.

2. The signal transmission method according to claim 1, wherein the signaling information includes information for identifying the scalable WCG video service.

3. The signal transmission method according to claim 1, wherein the encoded base layer video data or the encoded enhancement video data includes metadata having color gamut mapping information, color bit depth information or color mapping information for rendering the scalable WCG video data.

4. A signal transmission apparatus comprising:

an encoder configured to encode base layer video data and enhancement video data for providing a scalable wide color gamut (WCG) video service;

a signaling information encoder configured to encode signaling information for rendering scalable WCG video data of the scalable WCG video service;

a multiplexer configured to output a stream obtained by multiplexing the generated signaling information, the encoded base layer video data and the encoded enhancement video data; and

a transmission unit configured to transmit the multiplexed stream.

5. The signal transmission apparatus according to claim 4, wherein the signaling information includes information for identifying the scalable WCG video service.

6. The signal transmission apparatus according to claim 4, wherein the encoded base layer video data or the encoded enhancement video data includes metadata having color gamut mapping information, color bit depth information or color mapping information for rendering the scalable WCG video data.

7. A signal reception method comprising:

receiving a stream including base layer video data and enhancement video data for rendering scalable wide color gamut (WCG) video data of a scalable WCG video service;

demultiplexing the received stream and outputting video data including the base layer video data and the enhancement video data and signaling information;

decoding the demultiplexed signaling information; and

decoding the base layer video data and/or the enhancement layer video data based on the decoded signaling information and outputting legacy UHD video or WCG video.

8. The signal reception method according to claim 7, wherein the signaling information includes information for identifying the scalable WCG video service.

9. The signal reception method according to claim 7, wherein the base layer video data or the enhancement layer video data includes metadata having color gamut mapping information, color bit depth information or color mapping information for rendering the scalable WCG video service data.

10. The signal reception method according to claim 9, wherein the WCG video data is rendered by color gamut mapping the base layer video data using the color gamut mapping information or upscaling a color bit depth of the base layer video data using the color bit depth information, based on the enhancement layer video data.

11. A signal reception apparatus comprising:

a receiver configured to receive a stream including base layer video data and enhancement video data for rendering scalable wide color gamut (WCG) video data of a scalable WCG video service;

a demultiplexer configured to demultiplex the received stream and to output video data including the base layer video data and the enhancement layer video data and signaling information;

a decoder configured to decode the demultiplexed signaling information; and
a video decoder configured to decode the base layer video data and/or the enhancement layer video data based on the decoded signaling information and to output legacy UHD video or WCG video.

12. The signal reception apparatus according to claim 11, wherein the signaling information includes information for identifying the scalable WCG video service.

13. The signal reception apparatus according to claim 11, wherein the base layer video data or the enhancement video data includes metadata having color gamut mapping information, color bit depth information or color mapping information for rendering the scalable WCG video service data.

14. The signal reception apparatus according to claim 13, wherein the WCG video is rendered by color gamut mapping the base layer video data using the color gamut mapping information or upscaling a color bit depth of the base layer video data using the color bit depth information, based on the enhancement layer video data.

# FIG. 1

| | |
|---|---|
| Encode base layer video data and enhancement video data capable of composing scalable WCG video data | S110 |

↓

| | |
|---|---|
| Generate signaling information capable of composing scalable WCG video data | S120 |

↓

| | |
|---|---|
| Output stream obtained by multiplexing generated signaling information and encoded base layer video data and enhancement video data | S130 |

↓

| | |
|---|---|
| Transmit multiplexed stream | S140 |

# FIG. 2

base stream → **Demultiplexer** (110) → UHD Stream → **Base layer decoder** (120) → UHD video → **EOTF** (130) → **Legacy UHD display** (200)

UHD base layer → **Bit depth Up-scaling** (150) → Bit depth up-scaled UHD base layer

Enh. stream → **Demultiplexer** (160) → Enh. stream → **Enhancement layer decoder** (170) → WCG Enh. Layer → **WCG video composition** (180) → WCG video → **WCG Video Post-processing** (190) → WCG video → **WCG display** (300)

EP 3 073 742 A1

# FIG. 3

180

base layer →

WCG Enh. Layer →

Color detail enhancement

→ WCG video

# FIG. 4

180    182    184

base layer →

WCG Enh. Layer →

Color gamut mapping → Color detail enhancement

→ WCG video

# FIG. 5

WCG video →

Tone mapping → transfer curve → Color correction matrix

→ Enhanced WCG video

WCG video post-processing unit 의 실시 예

# FIG. 6

BT. 2020, 10bit

=

BT. 709, 10bit

+

Residual

Color detail enhancement

# FIG. 7

BT. 2020, 10bit

=

BT. 2020, (10bit)

gamut mapping

BT. 709, 8bit

+

Residual

Color detail enhancement

HDTV (rec.709)
UHDTV (rec.2020)

CIE xy diagram

# FIG. 8

| Syntax | No. of bits | Mnemonic |
|---|---|---|
| TS_program_map_section () { | | |
| table_id | 8 | uimsbf |
| section_Syntax_indicator | 1 | bslbf |
| '0' | 1 | bslbf |
| reserved | 2 | bslbf |
| section_length | 12 | uimsbf |
| program_number | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| reserved | 3 | bslbf |
| PCR_PID | 13 | uimsbf |
| reserved | 4 | bslbf |
| program_info_length | 12 | uimsbf |
| for (i = 0; i < N; i++) { | | |
| descriptor() | | |
| } | | |
| for (i = 0; i < N1; i++) { | | |
| stream_type | 8 | uimsbf |
| reserved | 3 | bslbf |
| elementary_PID | 13 | uimsbf |
| reserved | 4 | bslbf |
| ES_info_length | 12 | uimsbf |
| for (i = 0; i < N2; i++) { | | |
| descriptor() | | |
| } | | |
| } | | |
| CRC_32 | 32 | rpchof |
| } | | |

WCG_sub_stream_descriptor ( )

| Syntax | No. of bits | Format |
|---|---|---|
| UD_program_descriptor ( ) { | | |
| descriptor_tag | 8 | uimsbf |
| descriptor_length | 8 | uimsbf |
| UD_program_format_type | 8 | uimsbf |
| } | | |

0x08: Stream composed of legacy UHD video compatible base layer and enhancement layer which is residual information for composing WCG video based on residual enhancement

# FIG. 9

| Syntax | Description |
|---|---|
| Program map section ( ) { | |
| . . . | |
|     stream_type | 0x24 ( HEVC Video codec ) |
|     elementary_PID | 0x109A |
|     HEVC_video_descriptor ( ) | HEVC Video descriptor |
|     stream_type | 0xA1 ( HEVC Scalable layer video codec ) |
|     elementary_PID | 0x109B |
|     WCG_sub_stream_descriptor ( ) | Information on enhancement layer and information necessary to compose WCG video |
| . . . | |
| } | |

# FIG. 10

| Syntax | No. of bits | Format |
|---|---|---|
| WCG_sub_stream_descriptor ( ) { | | |
|     descriptor_tag | 8 | uimsbf |
|     descriptor_length | 5 | uimsbf |
|     reserved | 3 | |
|     EL_video_codec_type | 8 | uimsbf |
|     EL_video_profile | 8 | uimsbf |
|     EL_video_level | 8 | uimsbf |
|     EL_video_tier | 8 | uimsbf |
| } | | |

# FIG. 11

| sei_payload( payloadType, payloadSize ) { | Category | Descriptor |
|---|---|---|
| ... | | |
| if( payloadType == 52 ) | | |
| UDTV_scalable_color_gamut_service_info( payloadSize ) | 5 | |

| UDTV_scalable_color_gamut_service_info(payloadSize) { | C | Descriptor |
|---|---|---|
| UD_program_format_type | 5 | u(8) |
| if(UD_program_format_type == 'x08' { | | |
| WCG_substream_metadata ( ) | | |
| } | | |
| } | | |

# FIG. 12

| Syntax | No. of bits | Format |
|---|---|---|
| WCG_substream_metadata ( ) { | | |
|    original_UD_video_type | 4 | uimsbf |
|    reserved | 4 | uimsbf |
|    BL_bitdepth | 4 | uimsbf |
|    EL_bitdepth_diff | 4 | uimsbf |
|    BL_video_color_gamut_type | 4 | uimsbf |
|    EL_video_color_gamut_type | 4 | uimsbf |
|    EL_gamut_mapping_type | 4 | uimsbf |
|    reserved | 4 | uimsbf |
|    if(BL_video_color_gamut_type =='0110'){ | | |
|       RGBW_primaries ( ) | | |
|    } | | |
|    if(EL_video_color_gamut_type =='0110'){ | | |
|       RGBW_primaries ( ) | | |
|    } | | |
| } | | |

# FIG. 13

| Syntax | No. of bits | Format |
|---|---|---|
| RGBW_primaries ( ) { | | |
| color_primary_r_x | 8 | uimsbf |
| color_primary_r_y | 8 | uimsbf |
| color_primary_g_x | 8 | uimsbf |
| color_primary_g_y | 8 | uimsbf |
| color_primary_b_x | 8 | uimsbf |
| color_primary_b_y | 8 | uimsbf |
| white_primary_x | 8 | uimsbf |
| white_primary_y | 8 | uimsbf |
| } | | |

# FIG. 14

| original_UD_video_type | Description |
|---|---|
| 0000 ~ 0010 | reserved |
| 0011 | 3840 x 2160, 60p |
| 0100 | 3840 x 2160, 120p |
| 0101 | 4096 x 2160, 60p |
| 0110 | 4096 x 2160, 120p |
| 0111 | 7680 x 4320, 60p |
| 1000 | 7680 x 4320 , 120p |
| 1001 | 8192 x 4320, 60p |
| 1010 | 8192 x 4320, 120p |
| 1011-1111 | reserved |

## FIG. 15

| BL_video_color_gamut_type | Description |
|---|---|
| 0000 | BT. 601 |
| 0001 | BT. 709 |
| 0010 | DCI -P3 |
| 0011 | BT. 2020 (NCL) |
| 0100 | BT. 2020 (CL) |
| 0101 | XYZ |
| 0110 | User defined |
| 0111~1111 | Reserved |

## FIG. 16

| EL_video_color_gamut_type | Description |
|---|---|
| 0000 | BT. 601 |
| 0001 | BT. 709 |
| 0010 | DCI -P3 |
| 0011 | BT. 2020 (NCL) |
| 0100 | BT. 2020 (CL) |
| 0101 | XYZ |
| 0110 | User defined |
| 0111~1111 | Reserved |

# FIG. 17

| EL_gamut_mapping_type | Description |
|---|---|
| 0000 | No mapping |
| 0001 | Gain -offset conversion |
| 0010 | Linear matrix conversion |
| 0011 | Look -up table |
| 0011 ~ 1111 | Reserved |

# FIG. 18

| Syntax | No. of bits | Mnemonic |
|---|---|---|
| TS_program_map_section () { | | |
| table_id | 8 | uimsbf |
| section_Syntax_indicator | 1 | bslbf |
| '0' | 1 | bslbf |
| reserved | 2 | bslbf |
| section_length | 12 | uimsbf |
| program_number | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| reserved | 3 | bslbf |
| PCR_PID | 13 | uimsbf |
| reserved | 4 | bslbf |
| program_info_length | 12 | uimsbf |
| for (i = 0; i < N; i++) { | | |
| descriptor () | | |
| } | | |
| for (i = 0; i < N1; i++) { | | |
| stream_type | 8 | uimsbf |
| reserved | 3 | bslbf |
| elementary_PID | 13 | uimsbf |
| reserved | 4 | bslbf |
| ES_info_length | 12 | uimsbf |
| for (i = 0; i < N2; i++) { | | |
| descriptor () | | |
| } | | |
| } | | |
| CRC_32 | 32 | rpchof |
| } | | |

WCG_sub_stream
_descriptor ()

| Syntax | No. of bits | Format |
|---|---|---|
| UD_program_descriptor ( ) { | | |
| descriptor_tag | 8 | uimsbf |
| descriptor_length | 8 | uimsbf |
| UD_program_format_type | 8 | uimsbf |
| } | | |

0x09: Stream composed of legacy UHD video compatible base layer and enhancement layer which is residual information for composing WCG video based on gamut mapping

# FIG. 19

| sei_payload( payloadType, payloadSize ) { | Category | Descriptor |
|---|---|---|
| . . . | | |
| if( payloadType = = 52 ) | | |
| UDTV_scalable_color_gamut_service_info( payloadSize ) | 5 | |

| UDTV_scalable_color_gamut_service_info(payloadSize ) { | C | Descriptor |
|---|---|---|
| UD_program_format_type | 5 | u(8) |
| if(UD_program_format_type = '0x09' { | | |
| WCG_substream_metadata ( ) | | |
| } | | |
| } | | |

# FIG. 20

| Syntax | No. of bits | Format |
|---|---|---|
| WCG_substream_metadata ( ) { | | |
| original_UD_video_type | 4 | uimsbf |
| reserved | 4 | uimsbf |
| BL_bitdepth | 4 | uimsbf |
| EL_bitdepth_diff | 4 | uimsbf |
| BL_video_color_gamut_type | 4 | uimsbf |
| EL_video_color_gamut_type | 4 | uimsbf |
| EL_gamut_mapping_type | 4 | uimsbf |
| reserved | 4 | uimsbf |
| if(BL_video_color_gamut_type =='0110'){ | | |
| RGBW_primaries ( )  → FIG. 13 | | |
| } | | |
| if(EL_video_color_gamut_type ='0110'){ | | |
| RGBW_primaries ( ) | | |
| gamut_mapping_info()  → FIG. 21 | | |
| } | | |
| } | | |

# FIG. 21

| Syntax | No. of bits | Format |
|---|---|---|
| gamut_mapping_info ( ) { | | |
|   if (EL_gamut_mapping_type =='0001') { | | |
|     for (i = 0; i < 3; i++){ | | |
|       gain[ i] | 8 | uimsbf |
|       offset[ i] | 8 | uimsbf |
|     } | | |
|   } | | |
|   else if (EL_gamut_mapping_type =='0010') { | | |
|     matrix_composition_type | 4 | uimsbf |
|     reserved | 4 | uimsbf |
|     if(matrix_composition_type == '0100'){ | | |
|       reserved | 3 | uimsbf |
|       number_of_coeff | 5 | uimsbf |
|       for (i = 0; i < number_of_coeff; i++) | | |
|         gamut_mapping_coeff [i] | | |
|     } | | |
|   } | | |
|   else if (EL_gamut_mapping_type =='0011') { | | |
|     LUT_type | 4 | uimsbf |
|     reserved | 4 | uimsbf |
|     LUT_info( ) | | |
|   } | | |
| } | | |

# FIG. 22

| matrix_composition_type | Description |
|---|---|
| 0000 | NPM_709 |
| 0001 | NPM_DCI-P3 |
| 0010 | NPM_2020 |
| 0011 | NPM_XYZ |
| 0100 | NPM_current |
| 0101 | User_matrix |
| 0110 ~ 1111 | Reserved |

# FIG. 23

$$NPM_{HDTV} = \begin{bmatrix} 0.4124 & 0.3576 & 0.1805 \\ 0.2126 & 0.7152 & 0.0722 \\ 0.0193 & 0.1192 & 0.9505 \end{bmatrix}$$

$$NPM_{HDTV}^{-1} = \begin{bmatrix} 3.2410 & -1.5374 & -0.4986 \\ -0.9692 & 1.8760 & 0.0416 \\ 0.0556 & -0.2040 & 1.0570 \end{bmatrix}$$

# FIG. 24

| Chromaticity coordinates (CIE, 1931) | | x | y | z |
|---|---|---|---|---|
| Reference white | | $x_{DW}$ | $y_{DW}$ | $z_{DW} = 1 - (x_{DW} + y_{DW})$ |
| Reference white | Red | $x_{DR}$ | $y_{DR}$ | $z_{DR} = 1 - (x_{SR} + y_{DR})$ |
| | Green | $x_{DG}$ | $y_{DG}$ | $z_{DG} = 1 - (x_{SG} + y_{DG})$ |
| | Blue | $x_{DB}$ | $y_{DB}$ | $z_{DB} = 1 - (x_{DB} + y_{DB})$ |

$$\begin{bmatrix} C_{DR} \\ C_{DG} \\ C_{DB} \end{bmatrix} = \begin{bmatrix} x_{DR} & x_{DG} & x_{DB} \\ y_{DR} & y_{DG} & y_{DB} \\ z_{DR} & z_{DG} & z_{DB} \end{bmatrix}^{-1} \begin{bmatrix} x_{DW} / y_{DW} \\ 1 \\ z_{DW} / y_{DW} \end{bmatrix}$$

$$NPM_D = \begin{bmatrix} x_{DR} & x_{DG} & x_{DB} \\ y_{DR} & y_{DG} & y_{DB} \\ z_{DR} & z_{DG} & z_{DB} \end{bmatrix} \begin{bmatrix} C_{DR} & 0 & 0 \\ 0 & C_{DG} & 0 \\ 0 & 0 & C_{DB} \end{bmatrix}$$

# FIG. 25

$$\begin{pmatrix} r' \\ g' \\ b' \end{pmatrix} = \begin{pmatrix} coeff[0] & coeff[1] & coeff[2] \\ coeff[3] & coeff[4] & coeff[5] \\ coeff[6] & coeff[7] & coeff[8] \end{pmatrix} \begin{pmatrix} r \\ g \\ b \end{pmatrix}$$

# FIG. 26

| LUT_type | Description |
|---|---|
| 0000 | LUT |
| 0001 | 3D LUT |
| 0010 | 3D LUT (linear interpolation) |
| 0011~1111 | Reserved |

# FIG. 27

| Syntax | No. of bits | Mnemonic |
|---|---|---|
| TS_program_map_section ( ) { | | |
| table_id | 8 | uimsbf |
| section_Syntax_indicator | 1 | bslbf |
| '0' | 1 | bslbf |
| reserved | 2 | bslbf |
| section_length | 12 | uimsbf |
| program_number | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| reserved | 3 | bslbf |
| PCR_PID | 13 | uimsbf |
| reserved | 4 | bslbf |
| program_info_length | 12 | uimsbf |
| for (i = 0; i < N; i++) { | | |
| descriptor ( ) | | |
| } | | |
| for (i = 0; i < N1; i++) { | | |
| stream_type | 8 | uimsbf |
| reserved | 3 | bslbf |
| elementary_PID | 13 | uimsbf |
| reserved | 4 | bslbf |
| ES_info_length | 12 | uimsbf |
| for (i = 0; i < N2; i++) { | | |
| descriptor ( ) | | |
| } | | |
| } | | |
| CRC_32 | 32 | rpchof |
| } | | |

→ WCG_sub_stream
_descriptor ( )

| Syntax | No. of bits | Format |
|---|---|---|
| UD_program_descriptor ( ) { | | |
| descriptor_tag | 8 | uimsbf |
| descriptor_length | 8 | uimsbf |
| UD_program_format_type | 8 | uimsbf |
| } | | |

Stream composed of legacy UHD video compatible base layer and enhancement layer which is residual information for composing WCG video based on difference image or based on gamut mapping function

# FIG. 28

| Syntax | Description |
|---|---|
| Program map section ( ) { | |
| ... | |
| stream_type | 0x24 ( HEVC Video codec ) |
| elementary_PID | 0x109A |
| HEVC_video_descriptor ( ) | HEVC Video descriptor |
| stream_type | 0xA1 ( HEVC Scalable layer video codec ) |
| elementary_PID | 0x109B |
| WCG_sub_stream_descriptor ( ) | Information on enhancement layer and information necessary to compose WCG video |
| ... | |
| } | |

| Syntax | No. of bits | Format |
|---|---|---|
| WCG_sub_stream_descriptor ( ) { | | |
| descriptor_tag | 8 | uimsbf |
| descriptor_length | 5 | uimsbf |
| reserved | 3 | |
| EL_video_codec_type | 8 | uimsbf |
| EL_video_profile | 8 | uimsbf |
| EL_video_level | 8 | uimsbf |
| EL_video_tier | 8 | uimsbf |
| WCG_sub_stream_descriptor ( ) | | |
| } | | |

UD_program_format_type = 0x08: Refer to WCG_substream_metadata of FIG. 12

UD_program_format_type = 0x09: Refer to WCG_substream_metadata of FIG. 20

# FIG. 29

| Syntax | No. of bits | Mnemonic |
|---|---|---|
| service_description_section ( ) { | | |
| table_id | 8 | uimsbf |
| section_Syntax_indicator | 1 | bslbf |
| reserved_future_use | 1 | bslbf |
| reserved | 2 | bslbf |
| section_length | 12 | uimsbf |
| transport_stream_id | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| original_network_id | 16 | uimsbf |
| reserved_future_use | 8 | bslbf |
| for (i = 0; i < N; i++) { | | |
| service_id | 16 | uimsbf |
| reserved_future_use | 6 | bslbf |
| EIT_schedule_flag | 1 | bslbf |
| EIT_present_following_flag | 1 | bslbf |
| running_status | 3 | uimsbf |
| free_CA_mode | 1 | bslbf |
| descriptors_loop_length | 12 | uimsbf |
| for (j = 0; j < N; j++) { | | |
| descriptor ( ) | | |
| } | | |
| } | | |
| CRC_32 | 32 | rpchof |
| } | | |

UD_program_descriptor (), WCG_sub_stream_descriptor ()

(at this time, component_tag field is added), WCG_substream_metadata () or subset is transmittable

# FIG. 30

| Syntax | No. of bits | Mnemonic |
|---|---|---|
| event_information_section ( ) { | | |
|     table_id | 8 | uimsbf |
|     section_Syntax_indicator | 1 | bslbf |
|     reserved_future_use | 1 | bslbf |
|     reserved | 2 | bslbf |
|     section_length | 12 | uimsbf |
|     service_id | 16 | uimsbf |
|     reserved | 2 | bslbf |
|     version_number | 5 | uimsbf |
|     current_next_indicator | 1 | bslbf |
|     section_number | 8 | uimsbf |
|     last_section_number | 8 | uimsbf |
|     transport_stream_id | 16 | uimsbf |
|     original_network_id | 16 | uimsbf |
|     segment_last_section_number | 8 | uimsbf |
|     last_table_id | 8 | uimsbf |
|     for (i = 0; i < N; i++) { | | |
|         event_id | 16 | uimsbf |
|         start_time | 40 | bslbf |
|         duration | 24 | uimsbf |
|         running_status | 3 | uimsbf |
|         free_CA_mode | 1 | bslbf |
|         descriptor_loop_length | 12 | uimsbf |
|         for (i = 0; i < N; i++) { | | |
|             descriptor ( ) | | |
|         } | | |
|     } | | |
|     CRC_32 | 32 | rpchof |
| } | | |

UD_program_descriptor (), WCG_sub_stream_descriptor ()

(at this time, component_tag field is added), WCG_substream_metadata () or subset is transmittable

# FIG. 31

| Syntax | No. of bits | Mnemonic |
|---|---|---|
| terrestrial_virtual_channel_table_section ( ) { | | |
|     table_id | 8 | uimsbf |
|     section_Syntax_indicator | 1 | bslbf |
|     private_indicator | 1 | bslbf |
|     reserved | 2 | bslbf |
|     section_length | 12 | uimsbf |
|     transport_stream_id | 16 | uimsbf |
|     reserved | 2 | bslbf |
|     version_number | 5 | uimsbf |
|     current_next_indicator | 1 | bslbf |
|     section_number | 8 | uimsbf |
|     last_section_number | 8 | uimsbf |
|     protocol_version | 16 | uimsbf |
|     num_channels_in_section | 16 | uimsbf |
|     for (i = 0; i < num_channels_in_section; i++) { | 8 | uimsbf |
|         short_name | 8 | uimsbf |
|         reserved | | |
|         major_channel_number | 16 | uimsbf |
|         minor_channel_number | 40 | bslbf |
|         carrier_frequency | 24 | uimsbf |
|         channel_TSID | 3 | uimsbf |
|         program_number | 1 | bslbf |
|         ETM_location | 12 | uimsbf |
|         access_controlled | | |
|         hidden | | |
|         reserved | | |
|         hide_guide | | |
|         reserved | 32 | rpchof |
|         service_type | | |
|         source_id | | |
|         reserved | | |
|         descriptors_length | | |
|         for (i = 0; i < N; i++) { | | |
|             descriptor ( ) | | |
|         } | | |
|     } | | |

Parameterized service (0x07) or
extended parameterized service (0x09) or
new DTV service – scalable UHDTV (0x10)

UD_program_descriptor (), WCG_sub_stream_descriptor (),
WCG_substream_metadata() is
included when SEI message is not transmitted

# FIG. 32

# FIG. 33

# FIG. 34

RF channel
I/F

710 — Tuner &
Demodulator

720 — VSB
Decoder

730 — Demux

930

Enhancement layer

950

Scalable decoder

WCG video post-
processing

WCG UHD video

920

Color gamut
mapping

940

WCG metadata
- Color primary
- gamut mapping function

910

Bit depth
Up-scaling

BL_bitdepth
EL_bitdepth_diff

810

Base Layer

820

Decoder

Legacy UHD
Video

UD_program_descriptor,
WCG_sub_stream_descriptor

Section data processor
(PMT, VCT, EIT, SDT, ...)

740

# FIG. 35

Receive stream including base layer and enhancement video data capable of composing scalable WCG video data — S210

Demultiplex received stream and output signaling information, base layer video data and enhancement video data — S220

Decode demultiplexed signaling information — S230

Decode base layer video data to output legacy UHD video or decode base layer video data and enhancement video data to output WCG video, based on decoded signaling information — S240

**INTERNATIONAL SEARCH REPORT**

International application No.

**PCT/KR2014/011262**

| A. CLASSIFICATION OF SUBJECT MATTER |
|---|
| *H04N 21/234(2011.01)i, H04N 19/30(2014.01)i, H04N 19/186(2014.01)i* |
| According to International Patent Classification (IPC) or to both national classification and IPC |

| B. FIELDS SEARCHED |
|---|
| Minimum documentation searched (classification system followed by classification symbols) |
| H04N 21/234; H04N 1/64; H04N 5/58; H04N 7/26; H04N 9/64; H04N 19/30; H04N 19/186 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br><br>eKOMPASS (KIPO internal) & Keywords: Wide Color Gamut, Legacy UHD, color gamut mapping information, color bit depth information, color mapping information |

| C. DOCUMENTS CONSIDERED TO BE RELEVANT | | |
|---|---|---|
| Category* | Citation of document, with indication, where appropriate, of the relevant passages | Relevant to claim No. |
| X | LOUIS KEROFSKY et al., "Color Gamut Scalable Video Coding", Data Compression Conference (DCC), 2013, Snowbird, UT, 20-22 March 2013, pp. 211-220 ("http://ieeexplore.ieee.org/xpl/log in.jsp?tp=&arnumber=6543057&url=http%3A%2F%2Fieeexplore.ieee.org%2Fxpls%2Fabs_all.jsp%3Farnumber%3D6543057") See pages 211-215, 220 and figure 6. | 1-6 |
| Y | | 7-14 |
| Y | KR 10-1244576 B1 (INTEL CORPORATION) 25 March 2013 See paragraphs [0015]-[0050] and figures 2-6. | 7-14 |
| A | US 2013-0088644 A1 (ROBIN ATKINS) 11 April 2013 See paragraphs [0055]-[0082] and figures 3-5B. | 1-14 |
| A | US 2013-0251027 A1 (TAORAN LU et al.) 26 September 2013 See paragraphs [0026]-[0037] and figures 1-7B. | 1-14 |
| A | KR 10-2010-0097204 A (ATI TECHNOLOGIES ULC) 02 September 2010 See paragraphs [0011]-[0023] and figures 1-4. | 1-14 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 FEBRUARY 2015 (17.02.2015) | **23 FEBRUARY 2015 (23.02.2015)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT
Information on patent family members

International application No.

**PCT/KR2014/011262**

| Patent document cited in search report | Publication date | Patent family member | Publication date |
|---|---|---|---|
| KR 10-1244576 B1 | 25/03/2013 | CN 102119532 A<br>CN 102119532 B<br>GB 2473781 A<br>JP 05180374 B2<br>JP 2011-527862 A<br>KR 10-2011-0036612 A<br>US 2010-0008427 A1<br>US 8446961 B2<br>WO 2010-006015 A2<br>WO 2010-006015 A3 | 06/07/2011<br>25/12/2013<br>23/03/2011<br>10/04/2013<br>04/11/2011<br>07/04/2011<br>14/01/2010<br>21/05/2013<br>14/01/2010<br>15/04/2010 |
| US 2013-0088644 A1 | 11/04/2013 | EP 2583456 A1<br>JP 2013-535135 A<br>KR 10-1438385 B1<br>KR 10-2013-0028119 A<br>WO 2011-159617 A1 | 24/04/2013<br>09/09/2013<br>03/11/2014<br>18/03/2013<br>22/12/2011 |
| US 2013-0251027 A1 | 26/09/2013 | EP 2642755 A1 | 25/09/2013 |
| KR 10-2010-0097204 A | 02/09/2010 | CN 101939984 A<br>EP 2229772 A1<br>JP 2011-508245 A<br>US 2009-0147021 A1<br>US 8629884 B2<br>WO 2009-070864 A1 | 05/01/2011<br>22/09/2010<br>10/03/2011<br>11/06/2009<br>14/01/2014<br>11/06/2009 |

Form PCT/ISA/210 (patent family annex) (July 2009)